# EUROPÄISCHE PATENTSCHRIFT

(11) **EP 2 998 155 B1**
(45) Veröffentlichungstag und Bekanntmachung des Hinweises auf die Patenterteilung: **11.07.2018**
(21) Anmeldenummer: 15179823.8
(22) Anmeldetag: 05.08.2015
(51) Int. Cl.: B60N 2/02, B60N 2/30, B60N 2/14, B60N 2/24

(54) **NUTZFAHRZEUGKABINE MIT BEIFAHRERSITZ**
COMMERCIAL VEHICLE CAB WITH PASSENGER SEAT
CABINE DE VEHICULE UTILITAIRE DOTEE D'UN SIEGE PASSAGER

(30) Priorität: 19.09.2014 DE 102014113604
(43) Veröffentlichungstag der Anmeldung: 23.03.2016
(73) Patentinhaber: GRAMMER AG, 92224 Amberg (DE)
(72) Erfinder: Hegen, Martin, 92224 Amberg (DE); Meyder, Volkhart, 64658 Fürth / Odenwald (DE); Übelacker, Roland, 92536 Pfreimd (DE); Wittmann, Hubert, 92685 Floss (DE); Strohal, Christian, 31118 Braunschweig (DE)
(74) Vertreter: Hannke, Christian

(56) Entgegenhaltungen:
- DE-A1-102008 047 659
- US-A1- 2005 264 020

## Beschreibung

Die Erfindung betrifft eine Fahrerkabine eines Nutzfahrzeugs.

Fahrer von Nutzfahrzeugen wie eines Lastkraftwagens (LKW) müssen häufig aufgrund von vorgeschriebenen Ruhezeiten oder aufgrund eines LKW-Wechsels eine Fahrerkabine eines LKWs mit ihrer Ausrüstung neu ausstatten. Hierfür müssen häufig verschiedene Dokumente und PC-Tablets, Nahrungsmittel und Getränke, gegebenenfalls eine Kaffeemaschine und integrierte Cup-Holders sowie eine Cooling-Box mit gegebenenfalls einem Kühlschrank von dem Fahrer individuell neu in der Fahrerkabine eines LKWs eingerichtet werden. Zudem sind persönliche Ausrüstungen, wie Waschutensilien und Kleider, in der Kabine zu stationieren. Da mittlerweile die Anzahl der anzuordnenden und in die LKW-Kabine zu stationierenden individuellen Gegenstände des Fahrers sehr groß ist, besteht die Notwendigkeit, dies auf einfache und schnelle Weise stattfinden zu lassen und insbesondere die innerhalb einer Fahrerkabine notwendigen Einrichtungen und Gegenstände möglichst platzsparend und multifunktionell zu gestalten. Das Dokument US 2005/0264020 offenbart ein Kabine mit einem Fahrersitz, welcher um eine vertikale Schwenkachse verschwenkbar ist. Außerdem ist die Anordnung dieser Gegenstände in ordentlicher und aufgeräumter Form innerhalb der Kabine gewünscht. Dies ist häufig dadurch nicht realisierbar, dass aufgrund der Anordnung des Fahrersitzes und des Beifahrersitzes wenig Restplatz innerhalb der Kabine vorhanden ist, insbesondere wenn im hinteren Bereich der Kabine noch ein Schlafplatz vorhanden sein soll.

Demzufolge ist es Aufgabe der Erfindung, einen Beifahrersitz zu schaffen, welcher in dem Gesamtsystem der Fahrerkabine platzsparend integrierbar und bei Bedarf für mehrere Tätigkeiten des Fahrers oder des Beifahrers verwendbar ist.

Dies wird erfindungsgemäß durch die Merkmale des Anspruchs 1 gelöst. Bisherige Beifahrersitze aus dem Stand der Technik sind aus Kostengründen möglichst einfach gestaltet und daher nicht drehbar gegenüber der Bodenfläche, sondern mit dieser starr verbunden angeordnet. Allerdings bieten sich durch den zusätzlichen Freiheitsgrad zusätzliche Nutzungsmöglichkeiten des Beifahrersitzes durch den Beifahrer oder den Fahrer. So kann dieser beispielsweise sich auf den Beifahrersitz setzen und sich in Richtung einer Mittelkonsole, welche zwischen Fahrersitz und Beifahrersitz angeordnet ist, drehen. Anschließend ist beispielsweise die Benutzung einer Kaffeemaschine oder eines Laptops möglich, welche an der Mittelkonsole angeordnet sind.

Ferner ist es möglich, den Beifahrersitz so zu verdrehen, dass ein Insasse auf dem Beifahrersitz entgegen zur Fahrtrichtung sitzt und beispielsweise am Laptop arbeitet. Ablenkungen, welche während der Fahrt durch den Blick nach vorne auf die Straße resultieren, sind somit gemindert. Außerdem sinkt durch die nach hinten gerichtete Sitzweise die Verletzungsgefahr bei einem Unfall, da der Körper des Fahrers bei nach vorne wirkender Beschleunigung durch den Beifahrersitz abgefangen wird.

In eben dieser zuletzt genannten Position des Beifahrersitzes ist es ferner möglich, zusätzliche Staufläche zu nutzen und einen Gegenstand auf dem Beifahrersitz zu positionieren. Dieser Gegenstand wird bei einem abrupten Bremsmanöver analog zu einem Beifahrer durch die Lehne des Beifahrersitzes abgefangen und so sicher positioniert.

Gemäß einer bevorzugten Ausführungsform sind zumindest zwei der zwischen jeweils zwei benachbarten Komponenten angeordneten Achsen, mehr bevorzugt alle Achsen parallel zueinander ausgerichtet.

Im Sinne der Erfindung bildet das Oberteil bevorzugt eine Kopfstütze und/oder Schulterstütze aus. Das Fußteil kann beispielsweise eine Auflageeinrichtung für die Beine und/oder die Füße des Sitzinsassen sein.

Dabei ist die Drehachse beispielsweise eine Welle und kann insbesondere auch als Drehzapfen oder Drehzapfenelement bezeichnet werden. Beispielsweise kann die Welle gegenüber der Bodenfläche mit mindestens zwei oberhalb und/ oder unterhalb der Bodenfläche in mindestens einem Tragelement angeordneten Wälzlagern drehbar gelagert sein, wobei das Tragelement mechanisch starr mit der Bodenfläche verbunden ist.

Bevorzugt ist die Drehachse hinsichtlich ihrer Winkelposition gegenüber der Bodenfläche arretierbar. Beispielsweise ist die Drehachse hierzu mit außenumfänglich gleichmäßig angeordneten Aussparungen versehen, welche beispielsweise im Abstand von 10° angeordnet sind. In diese kann ein komplementär dazu ausgebildeter Zapfen eingreifen, welcher fest an der Bodenfläche, aber verschwenkbar in Radialrichtung der Drehachse angeordnet ist. Durch ein Verschwenken des Zapfens in radialer Richtung der Drehachse und Eingreifen des Zapfens in jeweils eine Aussparung kann die Drehachse arretiert bzw. wieder freigegeben werden. Alternativ kann eine Anordnung aus Magneten, welche umfänglich in regelmäßigen Abständen an der Drehachse angeordnet sind, und Gegenmagneten, welche an der Bodenfläche umfänglich um die Drehachse angeordnet sind, verschiedene Rastpositionen definieren.

In der Praxis hat es sich unter anderem bewährt, wenn die Drehachse zwischen dem Fahrersitz und dem Beifahrersitz der Fahrerkabine angeordnet ist.

Die Ausrichtung der Bodenfläche ist dabei bevorzugt horizontal, wenn das Nutzfahrzeug auf ebenem Untergrund steht.

Um die Konfiguration des Beifahrersitzes an die Bedürfnisse des einzelnen Insassen anpassen zu können, ist es vorteilhaft, wenn die Komponenten des Beifahrersitzes um die jeweils eine zwischen jeweils zwei benachbarten Komponenten angeordnete Achse um bis zu +180° und/oder bis zu -180° verdrehbar sind. Mit anderen Worten ist der Winkel, der jeweils zwischen zwei Komponenten ausgebildet wird, in einem Bereich von -180° bis +180° veränderbar. So kann in einer Arbeitsposition beispielsweise das Fußteil zum Beispiel einen Winkel von 90° zum Sitzteil und/oder das Sitzteil zur Rückenlehne ebenfalls einen Winkel von 90° aufweisen. Möchte der Insasse hingegen eine Entspannungsposition einnehmen und sich nach hinten lehnen und die Füße hochlegen, können beide Winkel beispielsweise auf 135° bis 180° vergrößert werden.

Dies ist auch deswegen vorteilhaft, weil Komponenten, die aktuell nicht benötigt werden, sich platzsparend zusammenklappen und/oder benachbart zueinander anordnen lassen. So können beispielsweise alle Komponenten vertikal zum Boden der Fahrerkabine angeordnet werden, wenn der Beifahrersitz komplett zusammengeklappt ist. Dadurch wird in der Fahrerkabine zusätzlicher Stauraum frei, den der Fahrer nutzen kann.

Als besonders vorteilhaft hat es sich erwiesen, wenn der Beifahrersitz von einem ersten Zustand, in dem das Oberteil mit den restlichen Komponenten verbunden angeordnet ist, in einen zweiten Zustand, in dem das Oberteil von den restlichen Komponenten getrennt angeordnet ist, umbaubar ist. Es versteht sich, dass das Oberteil im ersten Zustand insbesondere mit der Rückenlehne verbunden angeordnet ist. Die Rückenlehne ist wiederum auch mit dem Sitzteil verbunden angeordnet. Am Sitzteil ist noch das Fußteil verbunden angeordnet.

Dadurch ergeben sich wesentliche Vorteile, da der Beifahrersitz ohne Oberteil sehr kompakt zusammenklappbar ist. Dies ist vor allem deswegen möglich, da der Beifahrersitz nicht immer in Verwendung ist, sondern natürlich vor allem der Fahrersitz verwendet wird. Der Beifahrersitz wird beispielsweise nur zu den Pausenzeiten des Fahrers und dann durch den Fahrer benutzt.

Beispielsweise kann das Oberteil mittels einer Schnapp- oder Clipsverbindung an der Rückenlehne angeordnet sein. Zwei Schnappelemente, wovon ein erstes Schnappelement Teil des Oberteils und ein zweites Schnappelement Teil der Rückenlehne ist, bilden dabei zueinander die Clipsverbindung und können beispielsweise als funktionelle Elemente einen federnden Haken beim ersten Schnappelement und eine dazu passende Aussparung beim zweiten Schnappelement ausgestalten.

Eine weitere Möglichkeit stellt die Anbringung einer verschiebbaren abgesetzten Welle dar, d.h. einer Welle mit in ihrer axialen Richtung variierendem Durchmesser. Beispielsweise wird das Oberteil mittels eines daran angebrachten Gabelelements auf einen ersten Abschnitt der horizontal angeordneten Welle mit großem Durchmesser aufgeklemmt. Ein Verschieben der Welle entlang ihrer Längsachse führt dazu, dass das Gabelelement nicht mehr mit dem ersten, sondern mit einem zweiten Abschnitt der Welle mit kleinem Durchmesser in Kontakt steht. Die Klemmwirkung ist dadurch aufgehoben und das Oberteil kann abgezogen werden.

Denkbar sind außerdem weitere Lösungen, welche die Anordnung eines Hebels an einer an der Rückenlehne angeordneten Welle vorsehen. Dieser Hebel weist ein Ende auf, welches entweder in Eingriff mit dem Oberteil steht (Formschluss) oder dieses festklemmt (Reibschluss) und zur Aufhebung der Verbindung vom Oberteil lösbar ist. Ebenfalls denkbar ist die Anordnung drehbarer Arretierelemente, welche das Oberteil mittels Formschluss halten.

Alternativ ist bei einer Schnappverbindung das erste Schnappelement als Hülse ausgestaltet, welche innen eine umlaufende Wulst aufweist; das zweite Schnappelement ist hingegen als Zapfen mit einer umlaufenden Nut ausgestaltet, wobei die Nut komplementär zur Wulst der Hülse ausgestaltet ist. Bevorzugt sind insgesamt zwei erste und zwei zweite Schnappelemente vorgesehen, welche beispielsweise am linken und rechten Rand des Beifahrersitzes vorgesehen sind. Bevorzugt sind die Schnappelemente im Wesentlichen oder ganz aus Kunststoff gefertigt.

Ferner kann das Oberteil auch für andere Funktionen eingesetzt werden. Es hat sich beispielsweise als besonders vorteilhaft erwiesen, wenn das Oberteil im zweiten Zustand des Beifahrersitzes auf einer Liegefläche der Fahrerkabine und in einem Winkel zu dieser anordenbar ist. Hier ist es besonders vorteilhaft, wenn die Liegefläche Elemente aufweist, welche ebenfalls Teil einer Schnappverbindung sein können. Bevorzugt weist die Liegefläche hier dritte Schnappelemente auf, welche baugleich zu den zweiten Schnappelementen ausgestaltet sind, so dass das Oberteil mittels der Schnappverbindung möglichst auf gleiche Weise sowohl an der Rückenlehne als auch an der Liegefläche angeordnet werden kann.

Der Fahrer kann sich bei einer Fahrpause auf die Liegefläche legen und das Oberteil als Rückenlehne verwenden. Dies ist besonders vorteilhaft, wenn der Fahrer etwas lesen oder trinken möchte und hierzu eine bequeme, halb-liegende Position einnehmen möchte, in der sein Oberkörper dennoch gestützt werden soll. Idealerweise ist der Winkel des Oberteils zur Liegefläche veränderbar; beispielsweise könnte das dritte Schnappelement mittels einer Schwenklagerung an einem Ende schwenkbar mit einem Lagerungselement der Liegefläche verbunden sein. Ebenfalls vorteilhaft ist es, wenn diese Schwenklagerung Raststufen aufweist, so dass der Fahrer den Winkel stufenweise verstellen kann.

Ist das Oberteil abgebaut und der Beifahrersitz nicht in Gebrauch, hat es sich in der Praxis bewährt, wenn die restlichen Komponenten im zweiten Zustand des Beifahrersitzes unterhalb der Liegefläche der Fahrerkabine anordenbar sind. Somit ist der Fußraum vor der Liegefläche weitestgehend frei, so dass der Fahrer sich beispielsweise auch auf die Liegefläche setzen und die Beine im Fußraum positionieren kann. Ebenfalls ist es möglich, dass zwei Personen nebeneinander auf der Liegefläche Platz nehmen.

Um eine möglichst große durchgehende Stützfläche für den Körper des Insassen bereitzustellen, hat es sich als besonders vorteilhaft erwiesen, wenn die erste Komponente und/oder mindestens eine der restlichen Komponenten im Wesentlichen rechteckförmig ausgebildet sind. Durch diese Ausgestaltung können auch die Längen der zwischen zwei Komponenten angeordneten Schwenkachsen möglichst groß gewählt werden, wodurch die Mechanik insgesamt stabiler wird. Idealerweise weisen zwei zueinander benachbarte Komponenten eine Breite auf, deren Wert zu 90 % bis 100 % identisch ist. Mechanisch stärker belastete Komponenten wie das Sitzteil oder die Rückenlehne können dabei in Tiefenrichtung eine Tasche oder Aussparung aufweisen, in welcher eine benachbarte Komponente im zweiten Zustand des Beifahrersitzes angeordnet werden kann. Beispielsweise kann so das Fußteil an der Rückseite des Sitzteils und das Oberteil an der Rückseite der Rückenlehne platzsparend angeordnet werden.

Im Sinne der Erfindung wird unter der Breite der Komponenten die Dimension verstanden, welche in Richtung einer Verbindung der Schultern des auf dem Beifahrersitz sitzenden Insassen verläuft. Unter der Länge der Komponenten hingegen ist die Dimension senkrecht zur Breite gemeint, welche parallel zur Verbindung zwischen Schultern und Becken des Fahrers verläuft. Die Tiefe der Komponenten stellt schließlich die Dimension dar, welche parallel zu einer Verbindung zwischen einer zum Körper des Insassen gewandten Vorderseite der Komponenten und der Rückseite der Komponenten verläuft.

Um innerhalb der Fahrerkabine den Beifahrersitz noch flexibler bewegen zu können, hat es sich ferner bewährt, wenn der Beifahrersitz mittels eines Schwenkarms mit der Drehachse verbunden angeordnet ist. So kann der Insasse des Beifahrersitzes die Sitzposition innerhalb der Kabine weitgehend frei bestimmen, was beispielsweise bei starker Sonneneinstrahlung vorteilhaft ist. Außerdem kann bei einem Beladungsvorgang der Fahrerkabine mit persönlichen Sachen oder Ausrüstungsgegenständen des Fahrers der Beifahrersitz stets so positioniert werden, dass er möglichst wenig im Weg steht.

Dabei ist es möglich, dass der Schwenkarm maschinell oder manuell verschwenkbar ist. Denkbar ist beispielsweise eine Unterstützung der Verschwenkbewegung mittels eines hydraulischen, elektrischen oder pneumatischen Antriebs, welcher von den Insassen des Nutzfahrzeugs bedient werden kann.

Weiterhin ist denkbar, dass der Schwenkarm gegenüber der Bodenfläche beabstandet oder kontaktierend ausgebildet ist. Im letzteren Fall ist es vorteilhaft, wenn der Schwenkarm zur Bodenfläche kugel- oder rollengelagert ist. Denkbar ist auch, dass zumindest an der unteren Fläche des Schwenkarms eine Gleitschicht angeordnet ist, welche beispielsweise aus Polyoxymethylen (POM) oder Polytetrafluorethylen (Teflon) besteht.

Beispielsweise kann der Schwenkarm mittels eines länglichen Hebels ausgebildet sein. Weiterhin kann er aus Kunststoff, einem faserverstärktem Kunststoff oder einem Metall wie zum Beispiel Aluminium oder Stahl oder einer Metalllegierung bestehen.

Gemäß einem bevorzugten Ausführungsbeispiel ist es dabei vorteilhaft, wenn der Schwenkarm parallel zur Bodenfläche der Fahrerkabine verlaufend angeordnet ist. So dreht er sich in einer Ebene parallel zur Bodenfläche um die Drehachse.

Weiterhin hat es sich zur Ausgestaltung der Verbindung zwischen Sitzteil und Schwenkarm als vorteilhaft erwiesen, wenn ein erstes Ende einer vertikalen Welle mit dem Sitzteil drehbar verbunden angeordnet und ein zweites Ende der Welle mit einem ersten Ende des Schwenkarms starr verbunden angeordnet ist. So kann das Sitzteil möglichst reibungsarm relativ zum Schwenkarm gedreht werden.

Es hat sich in der Praxis ferner bewährt, wenn der Schwenkarm gegenüber der Drehachse nicht nur verdrehbar, sondern auch entlang der Längsachse der Drehachse höhenverstellbar ist. Dadurch kann der Boden der Fahrerkabine weitestgehend freigeräumt werden, was bei der Beladung der Fahrerkabine, aber auch beispielsweise bei deren Reinigung vorteilhaft ist. Außerdem kann durch die resultierende Höhenverstellung des Beifahrersitzes auf die individuelle Statur des Insassen Rücksicht genommen werden.

Gemäß einer weiteren Lösung kann die vertikale Welle teleskopartig ausziehbar sein, wodurch ebenfalls eine Höhenverstellung des Beifahrersitzes stattfinden kann.

Alternativ kann der Schwenkarm mit einem ersten Endabschnitt im Bereich einer oberen Hälfte der Drehachse befestigt sein, wobei zwischen einer Längserstreckungsrichtung des Schwenkarms und einer Längserstreckungsrichtung der Drehachse ein Winkel ausgebildet ist, welcher beispielsweise mittels einer Antriebseinrichtung zwischen einem Wert von 45° und einem Wert von 135° aktiv einstellbar ist.

Diese Alternative bietet die Möglichkeit, den Schwenkarm als Lift für den Beifahrersitz zu verwenden, indem letzterer mittels des Schwenkarms von der unteren Position von 45° bis zur oberen Position von 135° anhebbar und auf gleic hem Wege wieder absenkbar ist. Dies kann mittels einer Antriebseinrichtung durchgeführt werden, wobei die Antriebseinrichtung dabei zum Beispiel ein Elektromotor oder ein Pneumatikzylinder sein kann. Bevorzugt ist die Antriebseinrichtung als Linearmotor ausgebildet.

Weiterhin ist es vorteilhaft, wenn der Beifahrersitz ausgetauscht oder komplett entfernt werden kann, weil für die anstehende Tour beispielsweise erhöhter Platzbedarf besteht und ein weiterer Behälter in der Fahrerkabine positioniert werden soll oder auch, weil der Beifahrersitz defekt ist und ausgetauscht werden soll. Es hat sich demnach als vorteilhaft erwiesen, wenn das Sitzteil mit der vertikalen Welle lösbar verbunden angeordnet ist und/oder der Schwenkarm mit der Drehachse lösbar verbunden angeordnet ist. Dies kann beispielsweise durch die Anordnung einer Splintverbindung zwischen Sitzteil und Welle und/oder zwischen Schwenkarm und Drehachse realisiert werden. Es sind natürlich sämtliche weitere in Frage kommenden technischen Verbindungen ebenfalls möglich.

Um die Drehposition des Beifahrersitzes möglichst individuell einstellen zu können, hat es sich in der Praxis bewährt, wenn der Schwenkarm in einer Ausgangsstellung im Wesentlichen parallel zu einer Breitenrichtung der Fahrerkabine angeordnet ist und/oder gegenüber der Ausgangsstellung um die Drehachse um bis zu +90° und/oder bis zu -90° verdrehbar ist. Durch die Begrenzung der Drehung kann eine Kollision mit anderen in der Fahrerkabine angeordneten Einrichtungen, wie dem Fahrersitz, vermieden werden. Außerdem ist es vorteilhaft, wenn der Beifahrersitz, mithin das Sitzteil, gegenüber der vertikalen Welle in mindestens zwei Rastpositionen, bevorzugt mindestens 10 Rastpositionen verdrehsicher fixierbar ist.

Ferner hat es sich als vorteilhaft erwiesen, wenn das Sitzteil gegenüber der vertikalen Welle um bis zu 360° verdreht anordenbar ist. Wie bei ein em Bürostuhl kann der Insasse so eine individuelle Position einnehmen.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: einen Fahrer beim Beladen des Nutzfahrzeugs;
- Fig. 2: einen beim Beladen nutzbaren Gepäcktransportwagen;
- Fig. 3: die Bestückung des Gepäcktransportwagens mit zwei Aufbewahrungsbehältern;
- Fig. 4: die Verbindung des Gepäcktransportwagens mit den Aufbewahrungsbehältern;
- Fig. 5: eine Darstellung des Gepäcktransportwagens mit den verbundenen Aufbewahrungsbehältern in vertikal aufgestelltem Zustand;
- Fig. 6: den Gepäcktransportwagen gemäß Fig. 5 mit einem weiteren Aufbewahrungsbehälter;
- Fig. 7: die Verbindung des Gepäcktransportwagens mit den verbundenen Aufbewahrungsbehältern mit dem weiteren Aufbewahrungsbehälter;
- Fig. 8: eine Darstellung des Gepäcktransportwagens mit den drei verbundenen Aufbewahrungsbehältern;
- Fig. 9: den Transport des Gepäcktransportwagens mit den drei verbundenen Aufbewahrungsbehältern durch den Fahrer;
- Fig. 10: das Innere einer Fahrerkabine;
- Fig. 11: den ersten Schwenkarm mit stangenartigen Elementen im verschwenkten Zustand;
- Fig. 12: die Verschwenkung des zweiten stangenartigen Elements zum Schwenkarm und die Anordnung außerhalb der Fahrerkabine;
- Fig. 13: das Ausfahren des zweiten stangenartigen Elements und das Befestigen des weiteren Aufbewahrungsbehälters am zweiten stangenartigen Element;
- Fig. 14: das Anheben des weiteren Aufbewahrungsbehälters mittels einer Einfahrbewegung des zweiten stangenartigen Elements;
- Fig. 15: das zweite stangenartige Element im maximal eingefahrenen Zustand;
- Fig. 16: den ersten Schwenkarm und den am zweiten stangenartigen Element befestigten Aufbewahrungsbehälter in einem verschwenkten Zustand;
- Fig. 17-19: verschiedene Schritte der Beladung der Fahrerkabine mit den ersten beiden Aufbewahrungsbehältern;
- Fig. 20: die beladene Fahrerkabine mit geschlossener Beifahrertür;
- Fig. 21: das Innere der Fahrerkabine aus der Vogelperspektive;
- Fig. 22-25: verschiedene Positionen des Aufbewahrungsbehälters innerhalb der Fahrerkabine;
- Fig. 26-29: verschiedene Schritte der Anpassung des Kabineninneren bei einer Pause des Fahrers;
- Fig. 30, 31: Belegung der Kabine mit Fahrer und Beifahrer;
- Fig. 32-35: verschiedene Schritte der Anpassung des Kabineninneren durch den Beifahrer;
- Fig. 36-39: verschiedene Schritte der Anpassung des Beifahrersitzes;
- Fig. 40-42: verschiedene Schritte der Anpassung des Kabineninneren vor Weiterfahrt;
- Fig. 43a, 43b: Komponenten der Fahrerkabine in der Übersicht;
- Fig. 44: eine Darstellung der Verbindung zwischen Beifahrersitz und Drehachse;
- Fig. 45: einen erfindungsgemäßen Beifahrersitz in einem zusammengeklappten Zustand;
- Fig. 46: eine Darstellung der Verbindung zwischen Oberteil und Liegefläche.

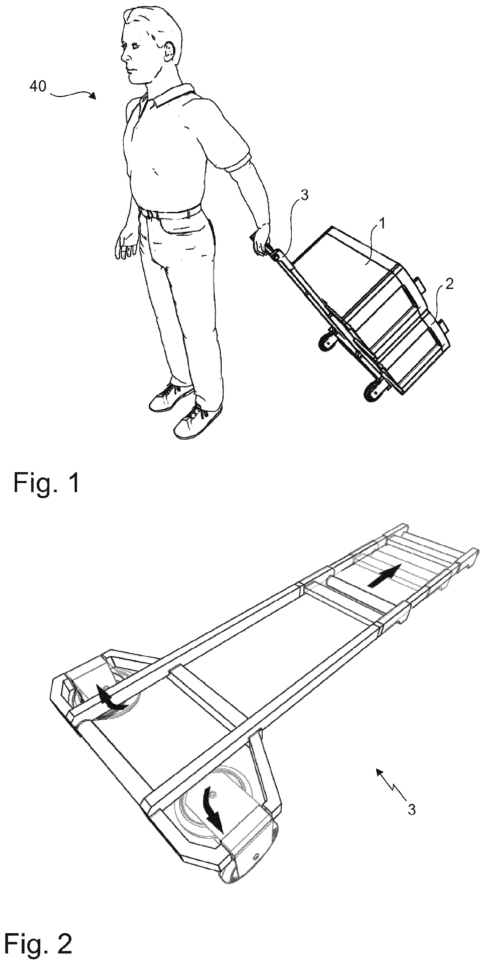

Gemäß Fig. 1 ist vorgesehen, dass der Fahrer 40 eine erste Boxeinheit 1 mit Arbeits- und Nahrungsmitteln und eine zweite Boxeinheit 2 mit persönlichen Utensilien, wie Kleider und Waschutensilien, auf einen gemeinsamen Gepäcktransportwagen 3 von beispielsweise einem Speditionsgebäude zu dem LKW transportiert. Der Gepäcktransportwagen 3 ist rollbar und ähnlich einem Trolley von Hand über eine Parkplatzfläche durch den LKW-Fahrer 40 zu ziehen.

Der Gepäcktransportwagen 3 hat gemäß Fig. 2 einklappbare Räder, um ihn raumsparend in der LKW-Kabine 21 oder außenseitig verstauen zu können. Zudem hat er einen ausziehbaren bzw. längenverstellbaren Griff.

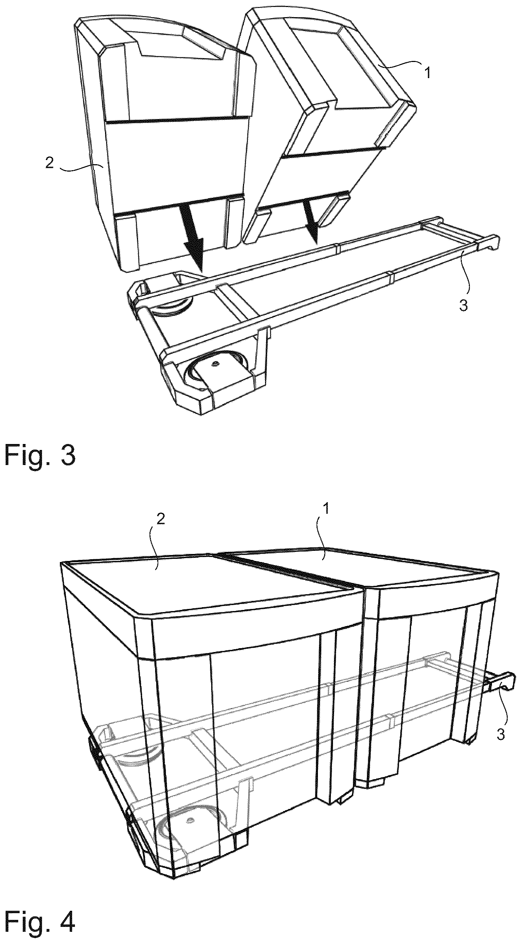

Der Gepäcktransportwagen 3 wird gemäß Fig. 3 mit den beiden Aufbewahrungsbehältern 1 und 2 bestückt und mit diesen mittels üblicher Verbindungen, z. B. mittels Klappverbindungen, verbunden. Eine derartige Verbindung ist in Fig. 4 dargestellt.

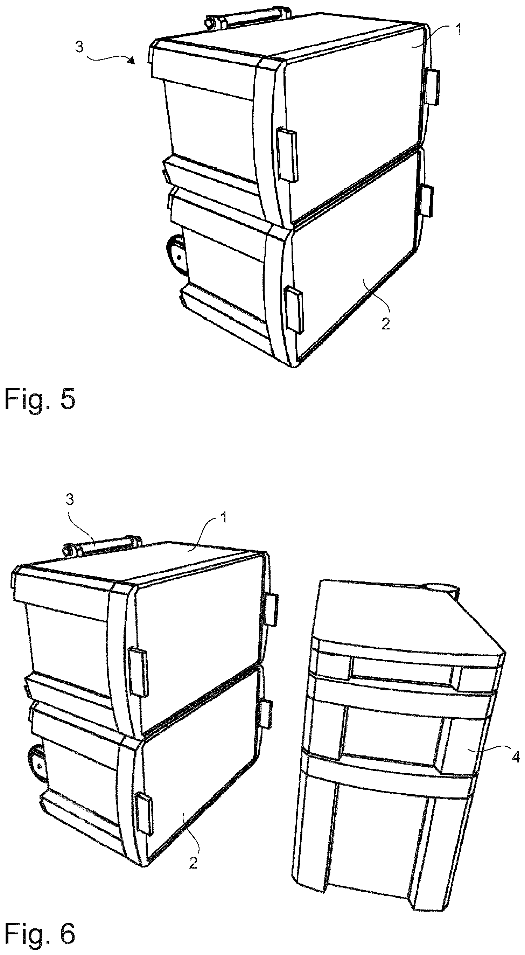

Anschließend wird der Gepäcktransportwagen 3 mit den Aufbewahrungsbehältern 1, 2 gemäß Fig. 5 aufgestellt, also in eine senkrechte Position gebracht.

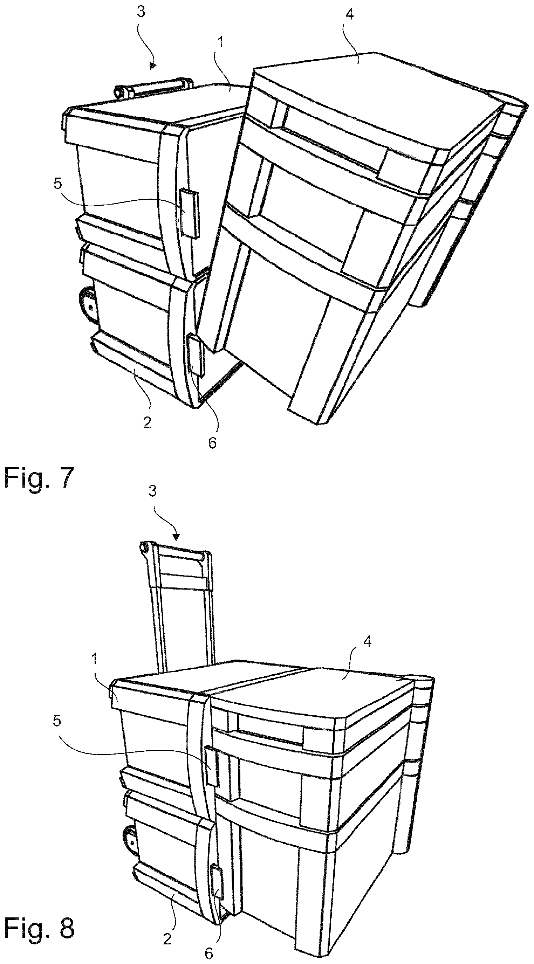

Die Aufbewahrungsbehälter 1, 2 können beispielsweise für persönliches Hab und Gut, wie Utensilien und Kleider verwendet werden. Ein weiterer Aufbewahrungsbehälter 4 gemäß Fig. 6 dient dann dazu, Arbeitsmaterialien wie Dokumente, Tablet-PCs, Kaffeemaschinen und gegebenenfalls weitere Nahrungsmittel mit in die Fahrerkabine 21 einzubringen und dort hin zu transportieren. Dieser weitere Aufbewahrungsbehälter 4 wird gemäß Fig. 7 durch beispielsweise Klappverbindungen 5, 6, die schwenkbar ausgebildet sind und aus Kunststoff bestehen, an den Aufbewahrungsbehältern 1 und 2 befestigt.

In Fig. 8 ist die feste Verbindung des Gepäcktransportwagens 3 zu den drei Aufbewahrungsbehältern 1, 2 und 4 dargestellt.

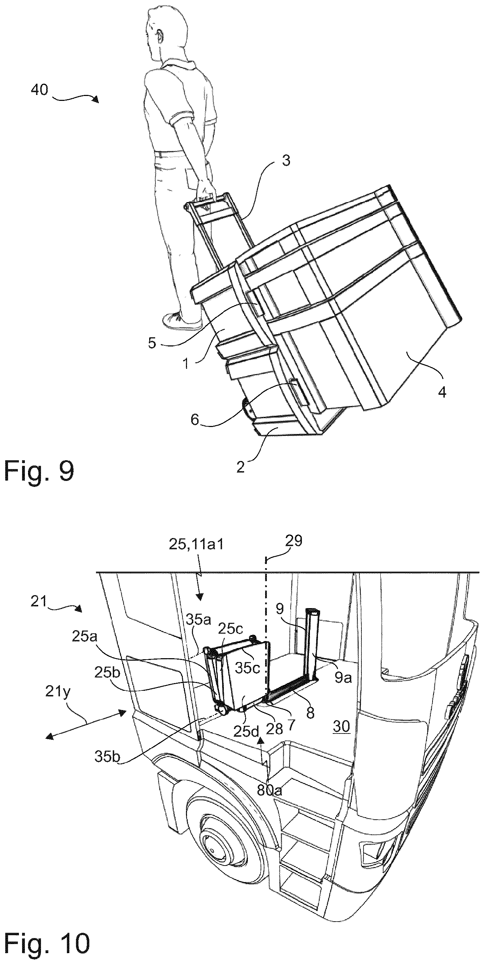

In Fig. 9 ist der Transport dieser drei Behälter 1, 2, 4 mittels des Transportwagens oder Gepäcktransportwagens 3 durch den Fahrer 40 wiedergegeben.

In Fig. 9 wird nun zusammen mit den fortfolgenden Figuren die erfindungsgemäße Beladung der Fahrerkabine 21 mit diesen drei Aufbewahrungsbehältern 1, 2 und 4 wiedergegeben. Zur einfacheren Darstellung ist die LKW-Kabine 21 hier nicht mit der Beifahrertür dargestellt. Es ist natürlich davon auszugehen, dass sich die Beifahrertür in einem offenen Zustand befindet.

In Fig. 10 ist deutlich zu entnehmen, dass ein zentraler Schwenkpunkt 7 bzw. eine vertikal angeordnete Drehachse 27a mit Mittelachse 29 innerhalb der Kabine 21 an einer Bodenfläche 30 der Kabine 21 befestigt ist. An der Drehachse 27a ist vorliegend ein bodenseitig verlaufender weiterer Schwenkarm 8 mit seinem ersten Endabschnitt 8a zum Durchführen einer Drehbewegung schwenkbar angeordnet, der wiederum an seinem anderen Endabschnitt 8b im Wesentlichen vertikal verlaufende stangenartige Elemente bzw. Drehachsen 9b, 9c aufweist.

Hierbei ist die Drehachse 27a zwischen einem nicht gezeigten Fahrersitz 24 und einem Beifahrersitz 25 der Fahrerkabine 21 an deren Bodenfläche 30 angeordnet. An der Drehachse 27a ist ein Schwenkarm 28 drehbar angeordnet.

Weiterhin ist zu sehen, dass der Beifahrersitz 25 in diesem Beispiel im zusammengeklappten Zustand vorliegt und ein Oberteil 25a als erste Komponente sowie weitere Komponenten 25b, 25c, 25d umfasst, welche als eine Rückenlehne 25b, ein Sitzteil 25c und ein Fußteil 25d ausgebildet sind. Die Komponenten 25a, 25b, 25c, 25d sind um jeweils eine 35a; 35b; 35c zwischen jeweils zwei benachbarten Komponenten 25a, 25b; 25b, 25c; 25c, 25d angeordnete Achse 35a; 35b; 35c verschwenkbar. Alle Achsen 35a, 35b, 35c sind vorliegend parallel zueinander ausgerichtet.

Der Beifahrersitz 25 ist außerdem um die Drehachse 27a vertikal verschwenkbar. Im gezeigten Beispiel ist der Beifahrersitz 25 mittels des Schwenkarms 28 mit der Drehachse 27a verbunden angeordnet. Der Schwenkarm 28 ist zunächst zur Bodenfläche 30 unter Ausbildung eines ersten Abstandes beabstandet ausgebildet.

Außerdem befindet sich dieser Schwenkarm 28 in seiner Ausgangsstellung 80a und ist somit im Wesentlichen parallel zu einer Breitenrichtung 21y der Fahrerkabine 21, mithin im Wesentlichen parallel zur Bodenfläche 30 angeordnet. Von dieser Ausgangsstellung 80a ausgehend ist er um die Drehachse 27a um bis zu +90° u nd/oder bis zu -90° verdrehbar (nicht gezeigt).

Darüber hinaus ist erkennbar, dass am weiteren Schwenkarm stangenartige Elemente 9b, 9c als Drehachsen angeordnet sind. Die Drehachse 9c ist beabstandet zur Drehachse 9b und bezüglich der oberen Endabschnitte 9b1, 9c1 auf gleicher Höhe zu diesem angeordnet und ferner mit dieser ersten Drehachse 9b mittels eines Verbindungselements 31 verbunden. Das Verbindungselement 31 ist dabei jeweils an den ersten oberen Endabschnitten 9b1, 9c1 der Drehachsen 9b, 9c angeordnet.

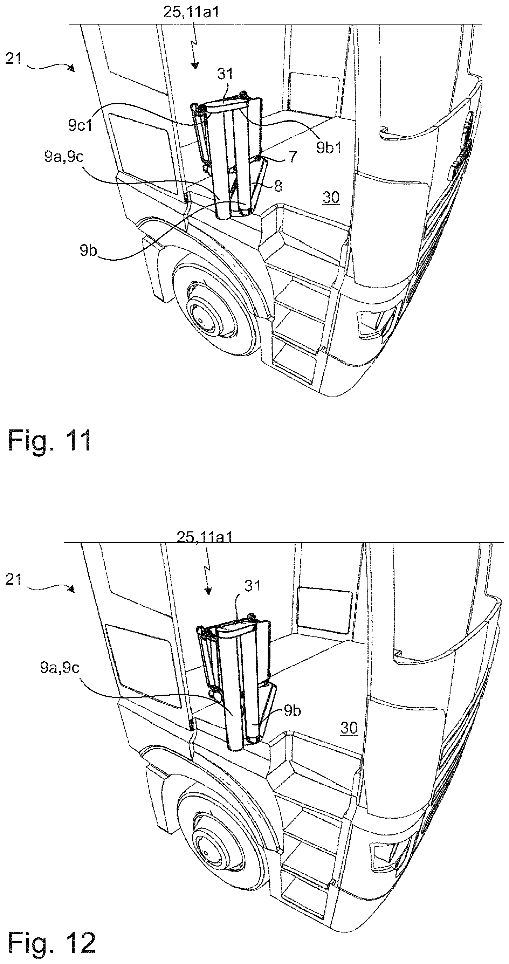

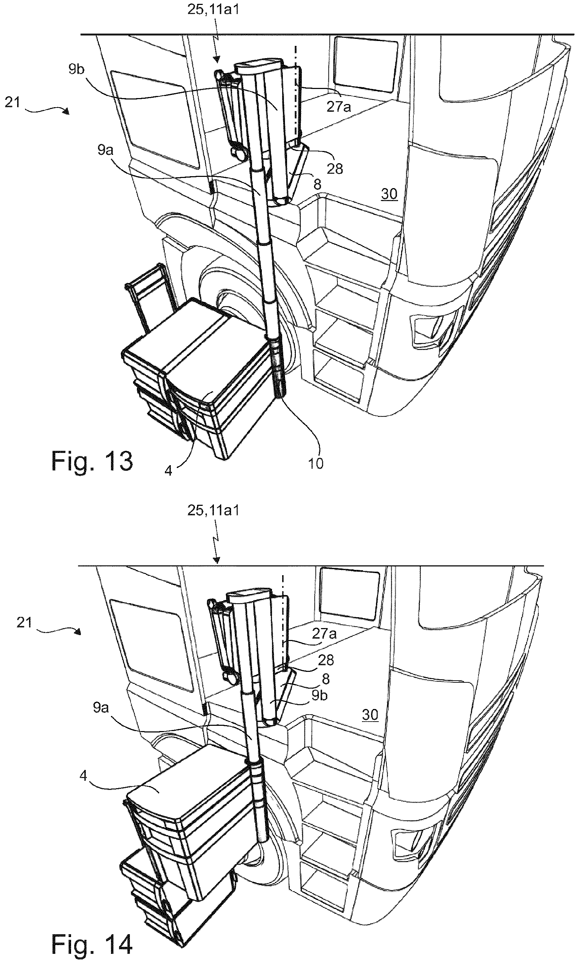

Gemäß Fig. 11 bzw. Fig. 12 kann der Schwenkarm 8 um den Schwenkpunkt 7 bzw. um die Drehachse 27a geschwenkt werden, so dass die beiden Drehachsen 9b, 9c über die Fahrerkabine 21 hinaus außenseitig an der Fahrerkabine 21 angeordnet sind. Dabei befindet sich die Drehachse 9c, die als Teleskopelement 9a ausgebildet ist, in ihrem Grundzustand 32a. Der zweite Endabschnitt 8b des Schwenkarms 8 weist in Richtung zur Beifahrertür. Anschließend findet - wie es in Fig. 12 und Fig. 13 dargestellt ist - ein Ausfahren der Drehachse 9c bzw. 9a statt, indem diese sich nach unten erstreckt bis zu einem hier maximal ausgefahrenen Zustand 32b und in eine dafür komplementär ausgebildete vorgesehene Eingreifeinrichtung 10 des Aufbewahrungsbehälters 4 eingreift. Dies kann beispielsweise mittels eines Klettverschlusses oder Formschlusses oder dergleichen stattfinden, um eine schnellstmögliche Verbindung zwischen dem Aufbewahrungsbehälter 4 und der ausgefahrenen Drehachse 9a herzustellen. Dabei sind bevorzugt die Klappverbindungen 5, 6 gelöst.

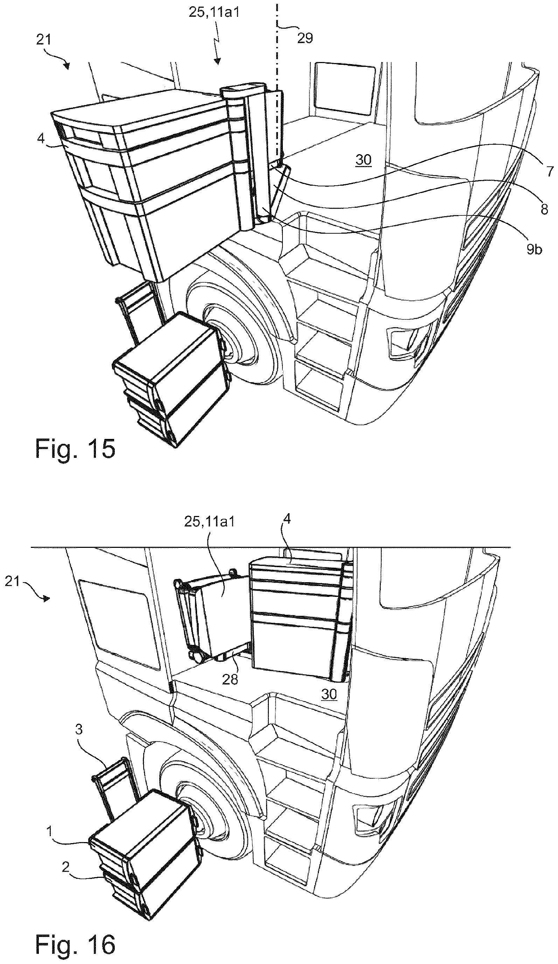

Gemäß Fig. 14, 15 und 16 findet anschließend ein Anheben des Aufbewahrungsbehälters 4 statt und ein Hineinverschwenken des Aufbewahrungsbehälters 4 um den Schwenkpunkt 7 bzw. die Drehachse 27a in die Fahrerkabine 21, wie es in Fig. 16 dargestellt ist. Anschließend kann der Aufbewahrungsbehälter 4 innerhalb der Fahrerkabine 21 an einem gewünschten Platz, der vorbestimmbar ist, abgestellt werden. Dies setzt voraus, dass der Beifahrersitz 25, wie er gemäß Bezugszeichen 11a1 in einem eingeklappten Zustand vorhanden ist, nicht momentan innerhalb des Transportweges für den Aufbewahrungsbehälter 4 angeordnet ist. Im eingeklappten Zustand 11a1 sind die Komponenten 25a, 25b, 25c, 25d des Beifahrersitzes 25 hinsichtlich ihrer flächigen Ausdehnung im Wesentlichen parallel zueinander angeordnet.

Somit findet erfindungsgemäß eine Schwenkung des aufgegriffenen Aufbewahrungsbehälters 4 um den Schwenkpunkt 7 bzw. die Drehachse 27a innerhalb der Fahrzeugkabine 21 statt. Ebenso erfindungsgemäß ist der Beifahrersitz 25 in diesem Zustand 11a1 eingeklappt und liegt somit als Klappsitz vor. Somit ist der eingeklappte Beifahrersitz 25, der ebenso erfindungsgemäß ausgebildet ist, nicht im Wege stehend bezüglich des Transportweges des Aufbewahrungsbehälters 4.

Die Schwenkeinrichtung, umfassend die erste Drehachse 27a, den weiteren Schwenkarm 8 sowie den Schwenkarm 28, die angeordnet ist, um innerhalb der Fahrerkabine 21 den Aufbewahrungsbehälter 4 und gegebenenfalls weitere Elemente, wie beispielsweise den eingeklappten Beifahrersitz 25 oder weitere Aufbewahrungselemente, die später noch gezeigt werden, zu verschwenken, ist als ein wesentlicher Punkt der Erfindung zu sehen.

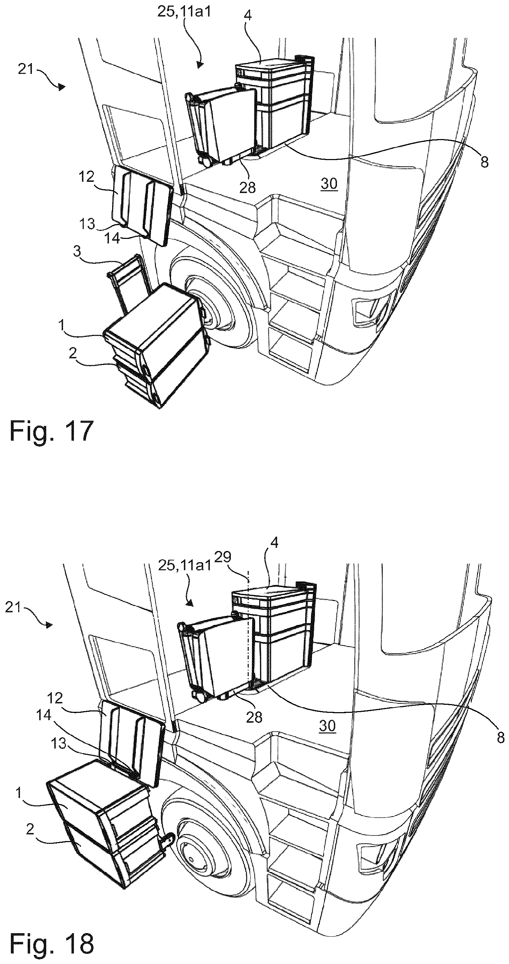

In Fig. 17, 18 und 19 wird der anschließende Transport der Aufbewahrungsbehälter 1 und 2 und somit die Beladung der Fahrerkabine 21 mit den Aufbewahrungsbehältern 1 und 2 dargestellt. Es ist zu sehen, dass diese Aufbewahrungsbehälter 1, 2 über die ohnehin in den bisherigen Fahrerkabinen 21 enthaltene seitliche Ladungsluke 12 mittels Einhängen in dafür vorgesehene Hakenelemente 13 und 14 an der Klappe dieser Öffnung 12 nach oben geschwenkt werden können und in den Fahrerkabinenraum gebracht werden können.

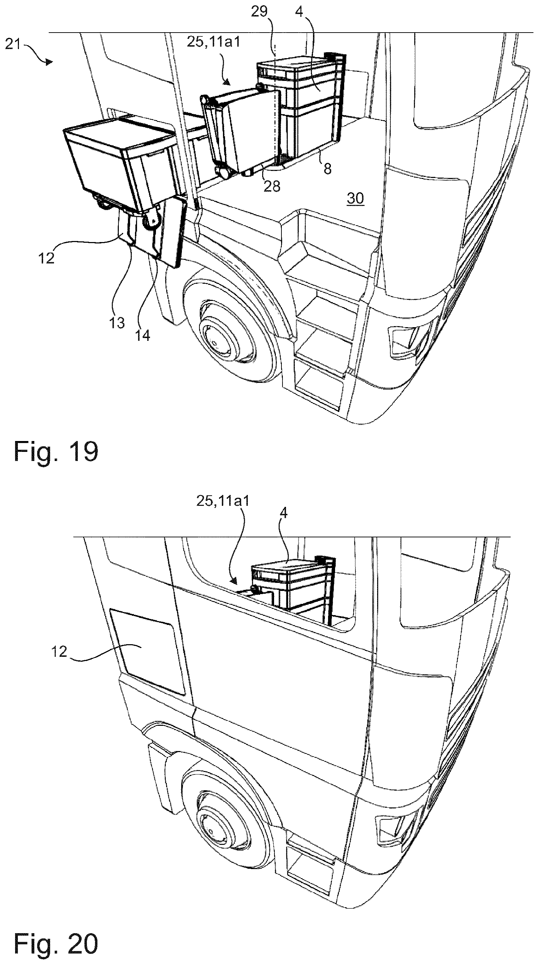

Gemäß Fig. 20 ist die Fahrerkabine 21 mit geschlossener Beifahrertür und den eingebrachten Aufbewahrungsbehältern dargestellt.

Aus Gründen der Übersichtlichkeit werden in den Figuren 11-20 die einzelnen Elemente 25a-d, 35a-c des Beifahrersitzes 25 nicht mit Bezugszeichen versehen.

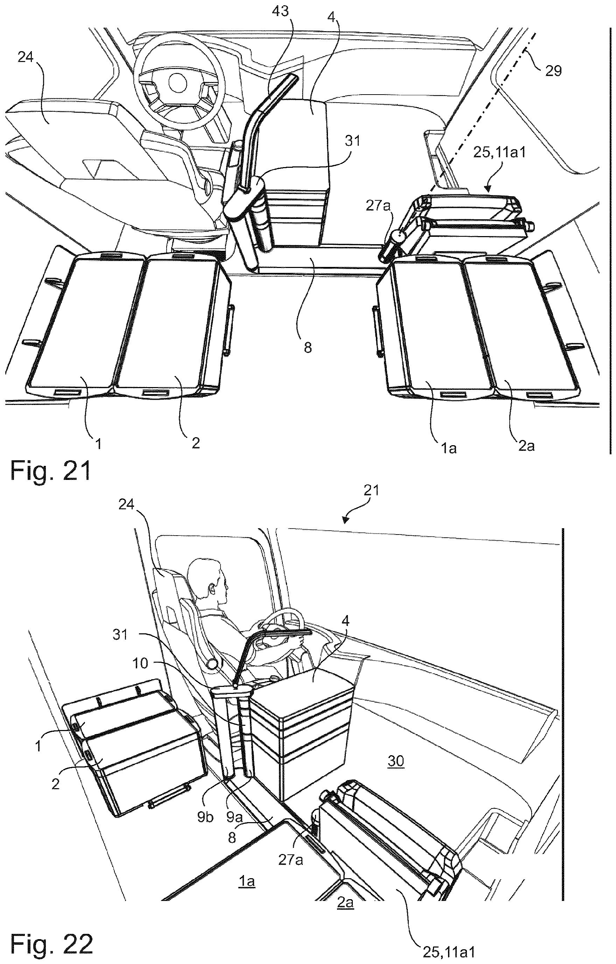

Fig. 21 zeigt nochmals den Fahrerkabineninnenraum nach Beladung mit den Aufbewahrungsbehältern 1, 2, 4. Dieser Darstellung ist deutlich zu entnehmen, dass der weitere Aufbewahrungsbehälter 4 in etwa mittig zwischen dem Beifahrersitz 25 und dem Fahrersitz 24 angeordnet ist. Dabei kann ein mit dem oberen Endabschnitt 9a1 temporär verbindbares und manuell bedienbares Schwenkstangenelement 43 für die Erleichterung der Verschwenkung des Aufbewahrungsbehälters 4 sorgen. Die Aufbewahrungsbehälter 1, 2 für persönliches Hab und Gut können ebenso insgesamt vier Aufbewahrungsbehälter 1, 2, 1a und 2a darstellen und innerhalb der Fahrerkabine 21 im rückwärtigen Bereich angeordnet sein. Dies ist in Fig. 21 dargestellt.

Ferner ist zu sehen, dass der Aufbewahrungsbehälter 4 nach wie vor an dem Teleskoparm 9a mechanisch fest verbunden angeordnet ist.

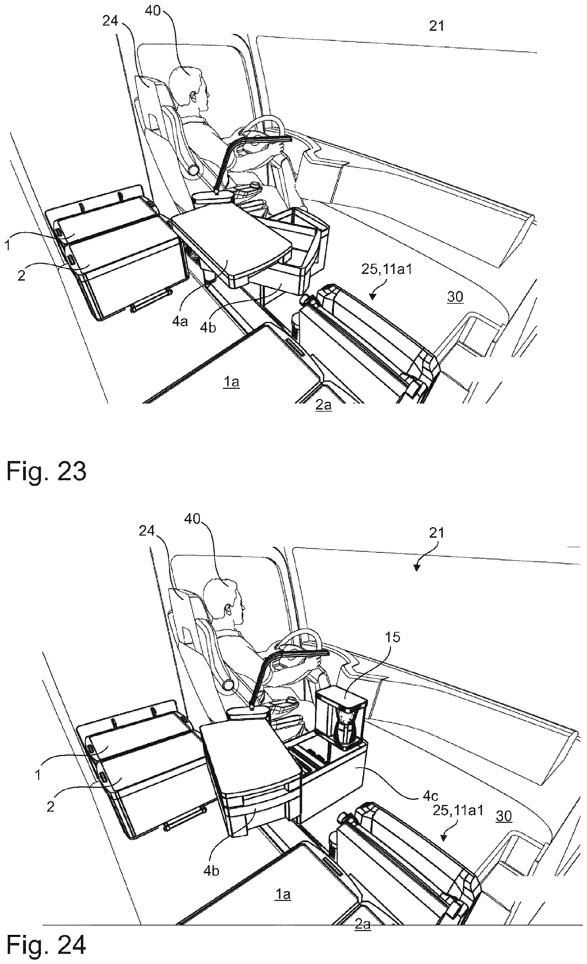

In Fig. 22, 23, 24 und 25 ist der Aufbewahrungsbehälter 4 mittig zwischen Fahrersitz 24 und Beifahrersitz 25 angeordnet. Vorteilhaft weist der Aufbewahrungsbehälter 4 einen derartigen Schwenkmechanismus innerhalb des Behälters 4 auf, dass er - wenn er oberseitig mittels der Befestigung 10 an dem Teleskoparm 9a angeordnet ist - in verschiedenen Niveaus unterschiedlich weit um den Teleskoparm 9a aufgeschwenkt werden kann. Dies ist beispielsweise in Fig. 23, 24 und 25 dargestellt.

Der obere Abschnitt 4a kann dabei beispielsweise als Arbeitsfläche beispielsweise zum Essen und Arbeiten dienen. Dazu könnte optional der obere Abschnitt 4a beispielsweise mit einem Tablet 65 versehen sein.

Ein darunterliegender, mittlerer Abschnitt 4b ist als Aufbewahrungsabschnitt beispielsweise in Kisten- oder Schachtelform mit oder ohne Deckel oder mit verschiedenen Facheinteilungen versehen und beinhaltet bestimmte aufzubewahrende Dokumente.

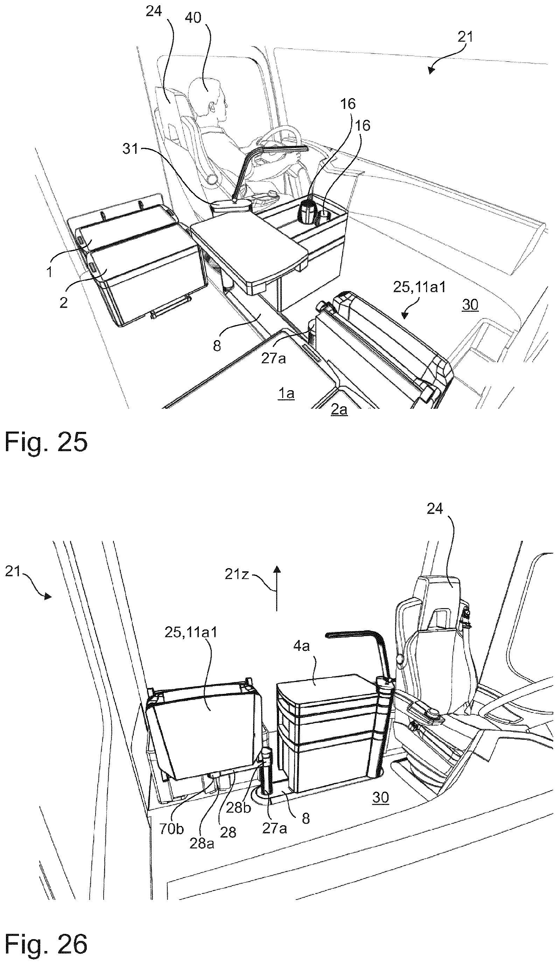

Ein darunterliegender, unterer Abschnitt 4c gemäß Fig. 24 beinhaltet weitere Aufbewahrungsteile, wie beispielsweise eine Kaffeemaschine 15, wie in Fig. 24 gezeigt. Ebenso kann ein Cup-Holder mit einer Kaffeekanne 16 in dem Aufbewahrungsbehälter 4 angeordnet sein. Dies ist in Fig. 25 dargestellt. Der Aufbewahrungsbehälter kann auch optional eine aktive Kühlbox für Kaltgetränke enthalten.

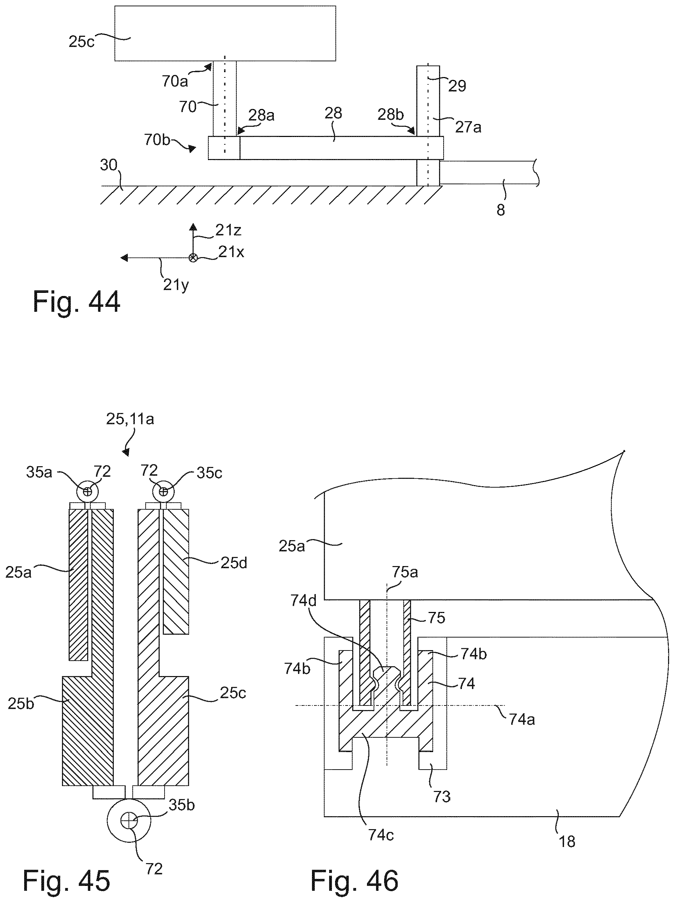

In Fig. 26 ist zu sehen, dass ein zweites Ende 70b einer Welle 70 mit einem ersten Ende des Schwenkarms 28 starr verbunden angeordnet ist (wie gemäß Fig. 44 im Detail gezeigt). Mit einem zweiten Ende 28b ist der Schwenkarm 28 um die Drehachse 27a schwenkbar gelagert. In diesem Beispiel ist der Schwenkarm 28 gegenüber der Drehachse 27a höhenverstellbar und wie abgebildet in Höhenrichtung 21z der Fahrerkabine 21 gegenüber der Bodenfläche 30 verschoben und unter Ausbildung eines zweiten Abstandes zur Bodenfläche 30 beabstandet angeordnet. Ein weiteres Verschieben des Schwenkarms 28 gegenüber der Drehachse 27a würde zu einem Ablösen des Schwenkarms 28 von der Drehachse 27a führen, wodurch der Beifahrersitz 25 komplett entfernt werden könnte.

Wenn der Fahrer 40 eine Pause machen möchte, begibt er sich - wie aus den Figuren 26, 27, 28 und 29 ersichtlich - auf den ebenso schwenkbaren Beifahrersitz 25 in eine Kaffeepausenposition, indem er zu dem oberen Abschnitt 4a des Aufbewahrungsbehälters 4, der sich in ausgeschwenkter Stellung befindet, hinschwenkt. D.h. dass der Beifahrersitz 25 mittels des Schwenkarms 28 um die Drehachse 27a derart geschwenkt wird, dass er zu dem Tisch 4a hingewandt ist.

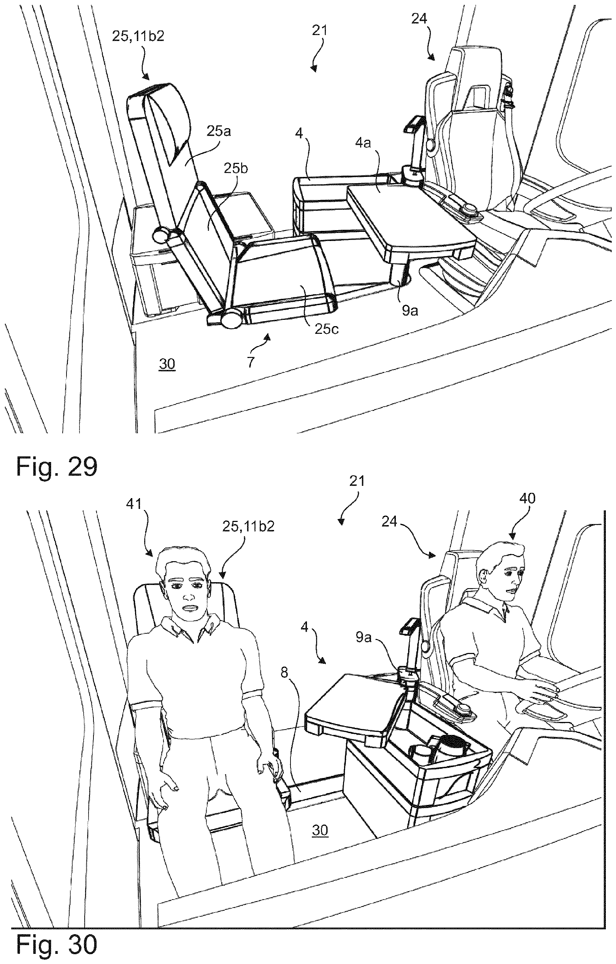

Zugleich kann der Tisch 4a um den Teleskoparm 9a herumgeschwenkt werden und dadurch von dem restlichen Aufbewahrungsbehälter 4 weggeschwenkt werden. Dies ist beispielsweise in Fig. 29 wiedergegeben. Die erfindungsgemäße Schwenkeinrichtung im Schwenkpunkt 7 beinhaltet somit nicht nur eine ortsfeste, stationäre Anordnung einer Schwenkachse, sondern auch verschiedene Schwenkarme, wie beispielsweise den weiteren Schwenkarm 8, an dem wiederum weitere Bauteile, wie der Aufbewahrungsbehälter 4, angeordnet sein können. Ebenso ist vorliegend der Beifahrersitz 25 mittels des Schwenkarms 28 an der Schwenkeinrichtung mit dem Schwenkpunkt 7 schwenkbar angeordnet.

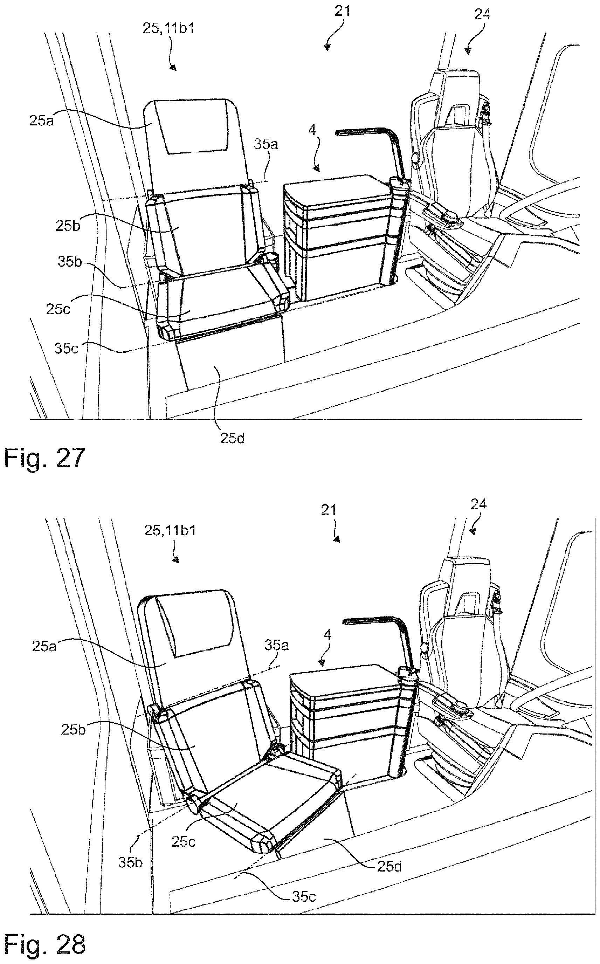

In den Fig. 27 und 28 ist der Beifahrersitz 25 zudem in einem ausgeklappten Zustand 11b1 abgebildet, bei dem jeweils zwei benachbarte Komponenten 25a, 25b; 25b, 25c; 25c, 25d in einem Winkel von 90° bis 135° zueinander angeordnet sind. Zu diesem Zweck wurden sie vom Fahrer um die Schwenkachsen 35a, 35b, 35c verschwenkt. Zu sehen ist, dass die Komponenten 25a, 25b, 25c, 25d im Wesentlichen rechteckförmig ausgebildet sind.

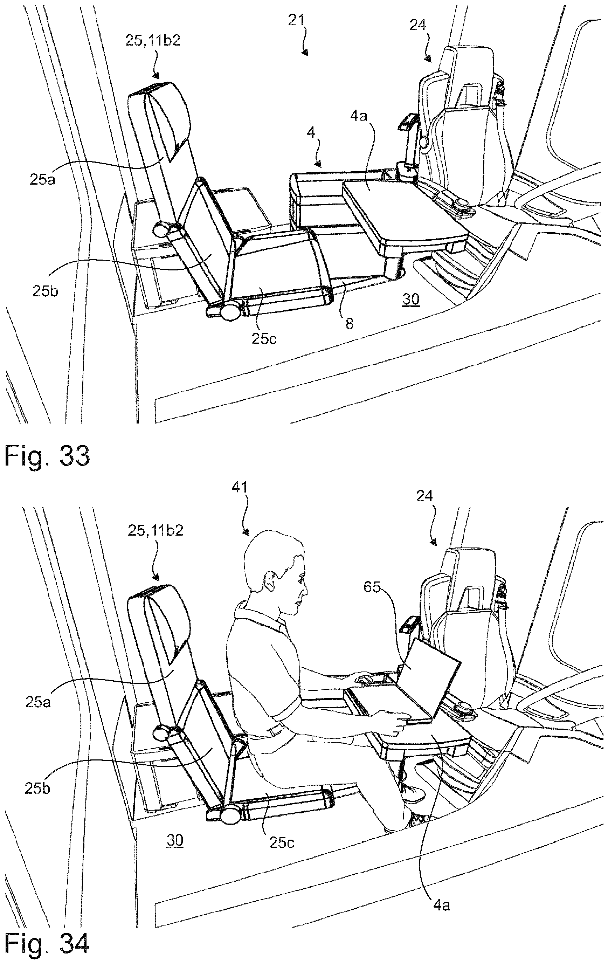

Die Fig. 29-35 zeigen den Beifahrersitz 25 in einem weiteren ausgeklappten Zustand 11b2, bei dem allerdings das Sitzteil 25c und das Fußteil 25d zusammengeklappt sind und somit parallel zueinander ausgerichtet sind. Somit ist das Fußteil 25d nicht sichtbar. Ebenfalls nicht sichtbar ist die Welle 70, welche mit dem Sitzteil 25c verbunden ist (siehe hierfür Fig. 44).

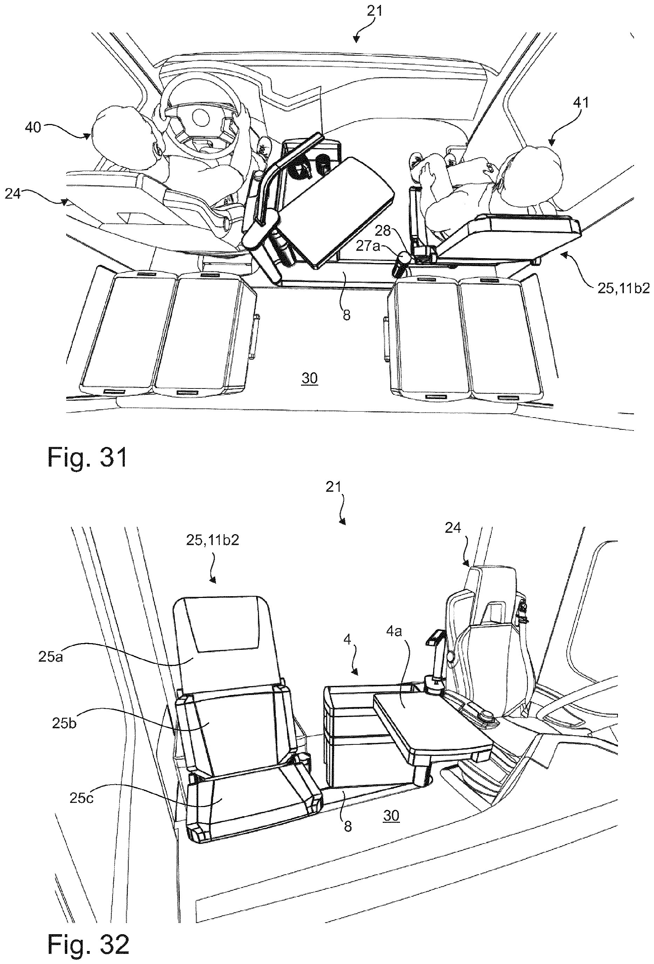

In Fig. 30 und 31 ist nochmals die Belegung beider Sitze 24, 25, also auch des Beifahrersitzes 25, mit verschwenktem Oberteil 4a des Aufbewahrungsbehälters 4, welches als Tisch ausgebildet sein kann, dargestellt.

In den Figuren 32-35 ist die Benutzung des Tablets 65 durch den Beifahrer 41 wiedergegeben. Hierfür wird der Beifahrersitz 25 mittels der Schwenkeinrichtung in Richtung des Tisches 4a des Aufbewahrungsbehälters 4 geschwenkt und auf das sich auf dem Tisch 4a befindenden Tablet 65 bzw. Laptop von dem Beifahrer 41, gegebenenfalls auch während der Fahrt, bedient.

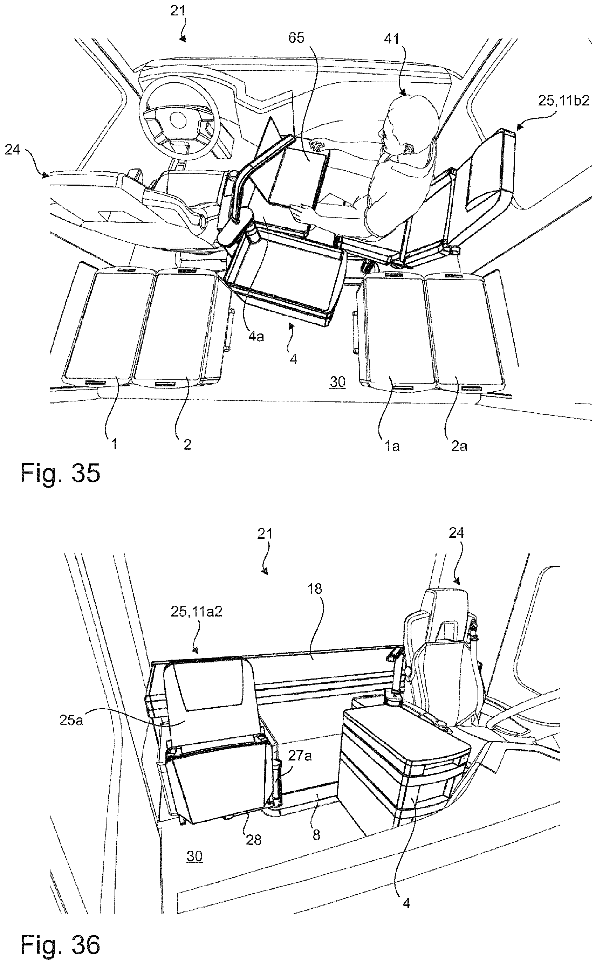

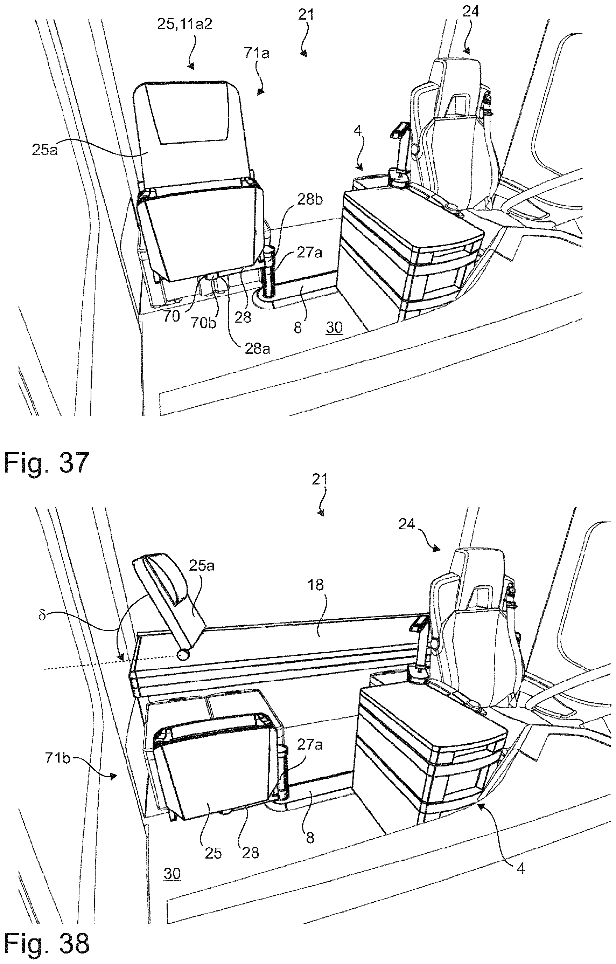

In den Figuren 36-39 ist dargestellt, wie der Beifahrersitz 25 entsprechend verändert werden kann, um dem Fahrer 40 oder dem Beifahrer 41 eine liegende Ruheposition im hinteren Teil der Fahrerkabine 21 zu ermöglichen. Gemäß Fig. 36 und 37 ist der Beifahrersitz 25 in einem zusammengeklappten Zustand 11a2 gezeigt, welcher sich vom Zustand 11a1 dadurch unterscheidet, dass das Oberteil 25a nicht Richtung Rückenlehne 25b geklappt ist.

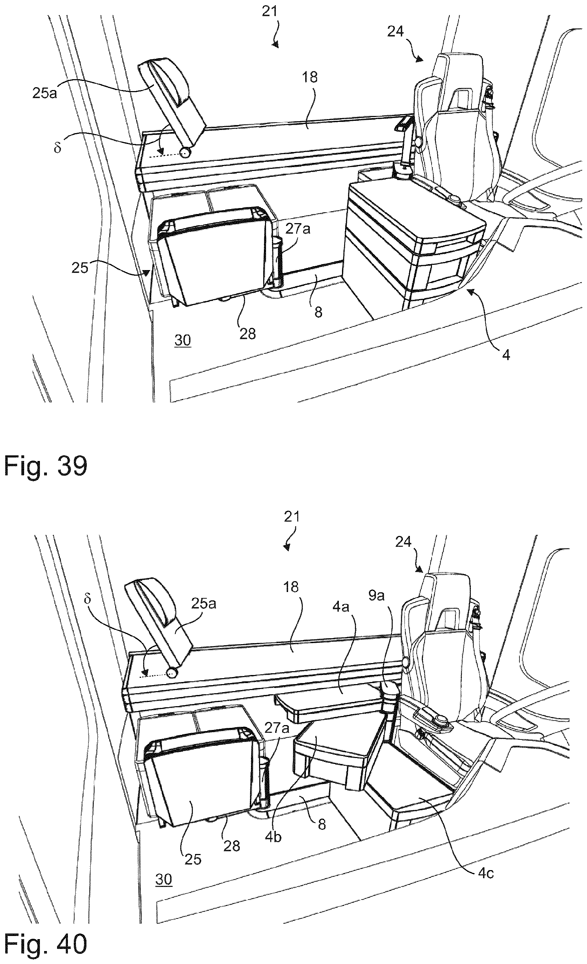

In Fig. 38 ist erkennbar, dass das Oberteil 25a des zusammengeklappten Beifahrersitzes 25 erfindungsgemäß abgenommen werden kann und auf die Liegefläche 18 im hinteren Bereich der Fahrerkabine 21 abgestellt werden bzw. an dieser mittels hier nur schematisch angedeuteter Schnappverbindungen befestigt werden kann (siehe Fig. 46 für Details). Das Oberteil 25a ist hier in einem Winkel δ zur Liegefläche 18 der Fahrerkabine 21 anordenbar und dient somit als Lehne für den Fahrer 40 oder Beifahrer 41, wie es in Fig. 39 im liegenden Zustand wiedergegeben ist. Zugleich wird der untere und somit restliche Teil 20 des Beifahrersitzes 25 im eingeklappten Zustand unterhalb der Liegefläche 18 angeordnet. Dies ist in Fig. 38 dargestellt.

Der Beifahrersitz 25 ist somit von einem ersten Zustand 71a, in dem das Oberteil 25a mit den restlichen Komponenten 25b, 25c, 25d verbunden angeordnet ist (siehe Fig. 37), in einen zweiten Zustand 71b, in dem das Oberteil 25a von den restlichen Komponenten 25b, 25c, 25d getrennt angeordnet ist (siehe Fig. 38), umbaubar.

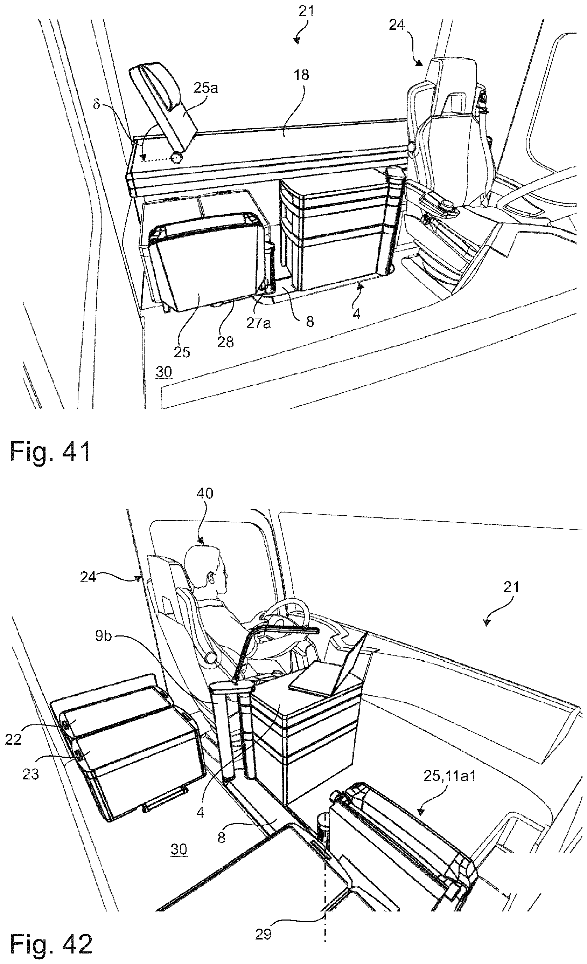

In Fig. 40, 41 und 42 wird nochmals die Abfahrt am nächsten Tag nach erfolgter Ruhepause dargestellt. Hierfür ist erfindungsgemäß der Teleskoparm 9a, der säulenartig ausgebildet ist, mit den einzelnen Teilen 4a, 4b und 4c des Aufbewahrungsbehälters 4 derart schwenkbar angeordnet, dass diese Teile 4a, 4b und 4c in ihrer dargestellten Form treppenartig bzw. wendeltreppenartig angeordnet werden können. Hierdurch kann sich der auf der Liegefläche 18 befindende Mensch 40, 41 über die Treppe nach unten bewegen in den Fahrerkabinenraum. Anschließend kann gemäß Fig. 41 diese treppenartige Anordnung vollständig mittels des Schwenkmechanismus und der säulenartigen Anordnung 9a unterhalb der Liegefläche 18 angeordnet werden, um in dem vorderen Bereich ausreichend Platz, zum Beispiel zu Anziehen mit Kleidern zu haben. Im Anschluss daran befindet sich dann der Fahrer 40 wieder auf seinem Fahrersitz 24 und der Aufbewahrungsbehälter 4 wird mittels der Schwenksäule 9a wieder nach vorne verschwenkt, um so neben dem Fahrersitz 24 angeordnet zu sein. Somit kann wieder eine Bedienung des Tablets 65 und von ähnlichen Instrumenten, gegebenenfalls der Kaffeemaschine 15, stattfinden. Zugleich kann die rückseitig angeordnete Liegefläche 18 im eingeklappten Zustand, wie es beispielsweise in den Boxen 22 und 23 dargestellt ist, angeordnet sein, um im rückwärtigen Bereich mehr Raum zur Verfügung zu haben.

Insgesamt ist das System durch seinen Schwenkmechanismus, die dadurch bedingte leichte Beladung mit entsprechenden Beladungshilfen und dem innovativen klappbaren Beifahrersitz sowie den Aufbewahrungsbehältern gekennzeichnet. Die in Leichtbauweise ausgebildeten einzelnen Elemente ermöglichen das Nutzen des Innenraumes einer Fahrerkabine 21 in vielfältiger Weise durch die erfindungsgemäße Schwenkeinrichtung, die verschiedenen Schwenkarme, den klappbaren Beifahrersitz 25 und durch die innovativen einzelnen Bauteile, wie Aufbewahrungsbehälter, kann der Innenraum immer wieder neu und vorteilhaft sowie raumsparend gestaltet werden.

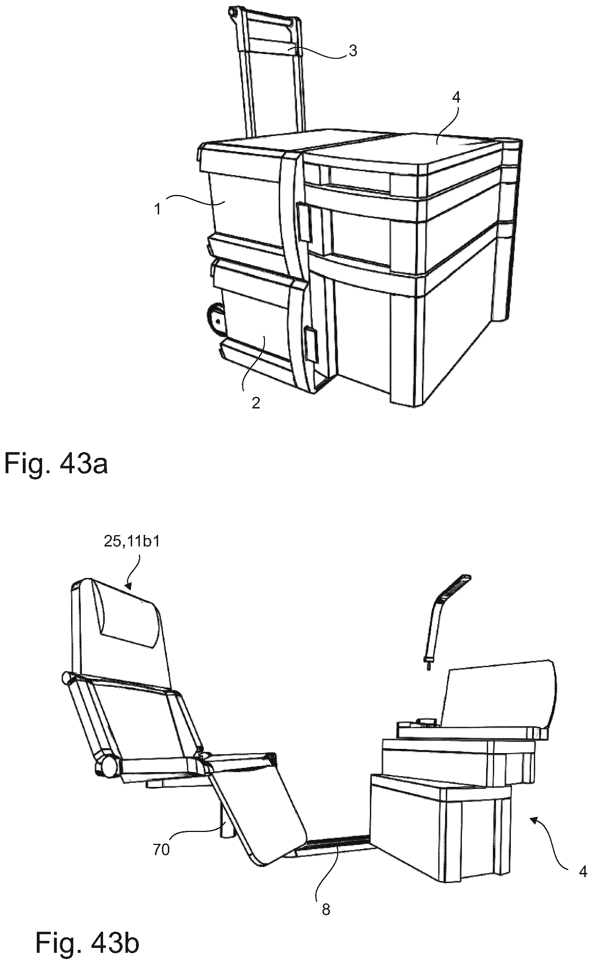

Die einzelnen Bauteile sind nochmals in Fig. 43a und 43b separat dargestellt.

Fig. 44 zeigt nochmals ausschnittsweise wichtige Elemente des Beifahrersitzes 25, wobei der Übersichtlichkeit wegen auf die Darstellung anderer Elemente verzichtet wurde. Insbesondere ist hier zu sehen, dass an der Bodenfläche 30 der Fahrerkabine 21 eine Drehachse 27a mit einer Längsachse 29 angeordnet ist. In unmittelbarer Nähe zur Bodenfläche 30 ist der weitere Schwenkarm 8 angeordnet.

Oberhalb von diesem Schwenkarm 8 ist der Schwenkarm 28 angeordnet und mit einem zweiten Ende 28b schwenkbar mit der Drehachse 27a verbunden angeordnet. Mit einem ersten Ende 28a ist der Schwenkarm 28 mit einem zweiten Ende 70b einer vertikalen Welle 70 starr verbunden angeordnet. Ein erstes Ende 70a der Welle 70 ist mit dem Sitzteil 25b des Beifahrersitzes 25 drehbar verbunden angeordnet. Der Schwenkarm 28 befindet sich in seiner Ausgangsstellung 80a und ist demnach im Wesentlichen parallel zu einer Breitenrichtung 21y der Fahrerkabine 21 angeordnet. Längenrichtung 21x und Höhenrichtung 21z der Fahrerkabine 21 sind ebenfalls dargestellt.

Fig. 45 zeigt eine Querschnittsansicht eines erfindungsgemäßen Beifahrersitzes 25 in einem zusammengeklappten Zustand 11a1, wobei die Komponenten 25a, 25b, 25c, 25d hier möglichst platzsparend anordenbar sind. Dies wird durch Aussparungen an der Rückenlehne 25b und am Sitzteil 25c erreicht, in welche das Oberteil 25a und das Fußteil 25d anordenbar sind.

Scharniere 72 sind zwischen jeweils zwei Komponenten angeordnet und weisen die Drehachsen 35a, 35b, 35c auf. Diese Scharniere 72 können als Drehmomentscharniere vorliegen, so dass der Beifahrersitz 25 nicht unbeabsichtigt in den ausgeklappten Zustand 11b1 oder 11b2 übergeht. Alternativ könnten unter der Polsterung des Beifahrersitzes 25 Magnete paarweise angeordnet sein, welche im zusammengeklappten Zustand 11a1, 11a2 jeweils miteinander wechselwirken.

Das Resultat der gemäß Fig. 45 vorliegenden Ausführungsform ist, dass der Beifahrersitz 25 im Zustand 11a1 eine sehr kompakte Form aufweist, welche einem Rechteck-Quader nahekommt. Es stehen zudem somit keine störenden Kanten oder Ecken außen hervor, welche eine Verletzungsgefahr darstellen könnten.

In der Fig. 46 ist eine Verbindung zwischen dem Oberteil 25a des Beifahrersitzes 25 und der Liegefläche 18 mittels einer Ausschnittsdarstellung dargestellt. Der Beifahrersitz 25 befindet sich demnach im Zustand 71b. Mit dem Rest der Liegefläche 18 starr verbunden angeordnet sind zwei zylinderscheibenartige Lagerelemente 73, welche eine zylinderscheibenartige Aussparung aufweisen, innerhalb der ein Drehelement 74 mit seinen beiden Endbereichen 74b um eine Achse 74a drehbar gelagert ist. Zwischen den beiden Endbereichen 74b ist ein zylindrisches Verbindungselement 74c angeordnet. Am Verbindungselement 74c wiederum ist ein zapfenförmiges Element 74d angeordnet, welches eine konische Spitze sowie eine umlaufende Nut aufweist. Die Elemente 74a, 74b, 74c, 74c bilden somit das Drehelement 74 aus.

Am Oberteil 25a ist eine Hülse 75 angeordnet, welche an ihrer Innenseite eine umlaufende Wulst aufweist. Diese Wulst der Hülse 75 ist komplementär zur umlaufenden Nut des zapfenförmigen Elements 74d ausgestaltet, so dass die Hülse 75 zur Befestigung des Oberteils 25a an der Liegefläche 18 über das zapfenförmige Element 74d geschoben werden kann, wodurch Wulst und Nut lösbar miteinander verrasten. Der gemäß Fig. 38 dargestellte Winkel δ zwischen Liegefläche 18 und Oberteil 25a kann mittels der dargestellten Drehverbindung aus Lagerelement 73 und Drehelement 74 verändert werden.

Die gleiche Ausgestaltung kann natürlich auf der anderen Seite der Liegefläche 18 und auf der anderen Seite des Oberteils 25a vorliegen.

### Bezugszeichenliste

- 1, 1a, 2, 2a, 4: Aufbewahrungsbehälter
- 3: Gepäcktransportwagen
- 4a, 4b, 4c: Abschnitte
- 4z: Höhenrichtung
- 5, 6: Klappverbindungen
- 7: Schwenkpunkt
- 8,28: Schwenkarme
- 8a, 8b: Endabschnitte
- 8c: Längserstreckungsrichtung
- 9b, 9c: stangenartige Elemente
- 9a1, 9b1, 9c1, 36a: oberer Endabschnitt
- 9a2, 9b2: unterer Endabschnitt
- 9a: Teleskoparm
- 9': Längserstreckungsrichtung
- 10: Eingreifeinrichtung
- 11a1, 11a2, 11b1, 11b2: Klappzustände
- 12: Ladungsluke
- 13, 14: Hakenelemente
- 15: Kaffeemaschine
- 16: Cupholder
- 17: Beifahrersitz, ausgeklappt
- 18: Liegefläche
- 19: Oberteil
- 20: restlicher Teil
- 21: Fahrerkabine
- 21x: Längenrichtung
- 21y: Breitenrichtung
- 21z: Höhenrichtung
- 22, 23: Box
- 24: Fahrersitz
- 25: Beifahrersitz
- 25a: Oberteil
- 25b: Rückenlehne
- 25c: Sitzteil
- 25d: Fußteil
- 26: Schwenkeinrichtung
- 27a, 27b: Drehachse
- 28: Ende
- 29: Längsachse
- 30: Bodenfläche
- 31: Verbindungselement
- 32a: Grundzustand
- 32b: ausgefahrener Zustand
- 33a: Ausfahrbewegung
- 33b: Einfahrbewegung
- 34: Leitungen
- 35a, 35b, 35c: Achsen
- 36: Funktionsdrehsäule
- 37a: Grundzustand
- 37b: ausgefahrener Zustand
- 38: Teleskopvorrichtung
- 39: Deckenfläche
- 40: Fahrer
- 41: Beifahrer
- 42a, b, c, d: hohlzylindrische Abschnitte
- 43: Schwenkstangenelement
- 65: Tablet
- 70: Welle
- 70a, 70b: Ende
- 71a, 71b: Zustand
- 72: Scharnier
- 73: Lagerelement
- 74: Drehelement
- 74a: Achse
- 74b: Endbereich
- 74c: Verbindungselement
- 74d: zapfenförmiges Element
- 75: Hülse
- 75a: Achse
- δ: Winkel

## Patentansprüche

1. Fahrerkabine (21), bevorzugt eines Nutzfahrzeugs, umfassend einen Fahrersitz (24) und einen Beifahrersitz (25), welcher zumindest eine als Oberteil (25a) ausgestaltete erste Komponente (25a) sowie eine benachbart zum Oberteil (25a) und zu einer als Sitzteil (25c) ausgestalteten dritten Komponente (25c) angeordnete als Rückenlehne (25b) ausgestaltete zweite Komponente (25b) umfasst, wobei die drei Komponenten (25a, 25b, 25c) um jeweils eine zwischen jeweils zwei benachbarten Komponenten (25a, 25b, 25c) angeordnete Achse (35a; 35b) verschwenkbar sind, wobei der Beifahrersitz (25) um eine an einer Bodenfläche (30) der Fahrerkabine (21) vertikal angeordneten Drehachse (27a) verschwenkbar ist.

2. Fahrerkabine (21) nach Anspruch 1,
**dadurch gekennzeichnet, dass**
der Beifahrersitz (25) ein Fußteil (25d) als vierte Komponente umfasst, welche um eine zwischen dem Sitzteil (25c) und dem Fußteil (25d) angeordnete Achse (35c) verschwenkbar ist.

3. Fahrerkabine (21) nach Anspruch 1 oder 2,
**dadurch gekennzeichnet, dass**
die Komponenten (25a, 25b, 25c, 25d) um die jeweils eine (35a; 35b; 35c) zwischen jeweils zwei benachbarten Komponenten (25a, 25b; 25b, 25c; 25c, 25d) angeordnete Achse (35a; 35b; 35c) um bis zu +180° und/oder bis zu -180° verdrehbar sind.

4. Fahrerkabine (21) nach einem der Ansprüche 1-3,
**dadurch gekennzeichnet, dass**
der Beifahrersitz (25) von einem ersten Zustand (71a), in dem das Oberteil (25a) mit den restlichen Komponenten (25b, 25c, 25d) verbunden angeordnet ist, in einen zweiten Zustand (71b), in dem das Oberteil (25a) von den restlichen Komponenten (25b, 25c, 25d) getrennt angeordnet ist, umbaubar ist.

5. Fahrerkabine (21) nach einem der vorhergehenden Ansprüche,
**dadurch gekennzeichnet, dass**
das Oberteil (25a) im zweiten Zustand (71b) des Beifahrersitzes (25) auf einer Liegefläche (18) der Fahrerkabine (21) und in einem Winkel (δ) zu dieser anordenbar ist.

6. Fahrerkabine (21) nach Anspruch 5,
**dadurch gekennzeichnet, dass**
die restlichen Komponenten (25b, 25c, 25d) im zweiten Zustand (71b) des Beifahrersitzes (25) unterhalb der Liegefläche (18) der Fahrerkabine (21) anordenbar sind.

7. Fahrerkabine (21) nach einem der vorhergehenden Ansprüche,
**dadurch gekennzeichnet, dass**
die erste Komponente (25a) und/oder mindestens eine der restlichen Komponenten (25b, 25c, 25d) im Wesentlichen rechteckförmig ausgebildet sind.

8. Fahrerkabine (21) nach einem der vorhergehenden Ansprüche,
**dadurch gekennzeichnet, dass**
der Beifahrersitz (25) mittels eines Schwenkarms (28) mit der Drehachse (27a) verbunden angeordnet ist.

9. Fahrerkabine (21) nach Anspruch 8,
**dadurch gekennzeichnet, dass**
ein erstes Ende (70a) einer vertikalen Welle (70) mit dem Sitzteil (25b) drehbar verbunden angeordnet und ein zweites Ende (70b) der Welle (70) mit einem ersten Ende (28a) des Schwenkarms (28) starr verbunden angeordnet ist.

10. Fahrerkabine (21) nach Anspruch 8 oder 9,
**dadurch gekennzeichnet, dass**
der Schwenkarm (28) entlang der Längsachse (29) der Drehachse (27a) höhenverstellbar ist.

11. Fahrerkabine (21) nach einem der Ansprüche 8-10,
**dadurch gekennzeichnet, dass**
das Sitzteil (25b) mit der vertikalen Welle (70) lösbar verbunden angeordnet ist und/oder der Schwenkarm (28) mit der Drehachse (27a) lösbar verbunden angeordnet ist.

12. Fahrerkabine (21) nach einem der vorhergehenden Ansprüche,
**dadurch gekennzeichnet, dass**
der Schwenkarm (28) in einer Ausgangsstellung (80a) im Wesentlichen parallel zu einer Breitenrichtung (21y) der Fahrerkabine (21) angeordnet ist und/oder gegenüber der Ausgangsstellung (80a) um die Drehachse (27a) um bis zu +90° und/oder bis zu - 90° verdrehbar ist.

13. Fahrerkabine (21) nach einem der vorhergehenden Ansprüche,
**dadurch gekennzeichnet, dass**
das Sitzteil (25b) gegenüber der vertikalen Welle (70) um bis zu 360° verdreht anordenbar ist.

## Claims

1. Driver's cab (21), preferably of a commercial vehicle, comprising a driver's seat (24) and a passenger seat (25), which comprises at least one first component (25a) designed as an upper part (25a) and a second component (25b) that is adjacent to the upper part (25a) and to a third component (25c) designed as a seat part (25c) and is designed as a backrest (25b), wherein the three components (25a, 25b, 25c) are each pivotable about one axis (35a; 35b) arranged between each two adjacent components (25a, 25b, 25c),
wherein
the passenger seat (25) is pivotable about a rotary shaft (27a) arranged vertically on a floor surface (30) of the driver's cab (21).

2. Driver's cab (21) according to claim 1,
**characterised in that**
the passenger seat (25) comprises a foot part (25d) as a fourth component, which foot part is pivotable about an axis (35c) arranged between the seat part (25c) and the foot part (25d).

3. Driver's cab (21) according to claim 1 or 2,
**characterised in that**
the components (25a, 25b, 25c, 25d) are each rotatable about the one (35a; 35b; 35c) axis (35a; 35b; 35c) arranged between each two adjacent components (25a, 25b; 25b, 25c; 25c, 25d) by up to +180° and/or up to -180°.

4. Driver's cab (21) according to any of claims 1 to 3,
**characterised in that**
the passenger seat (25) is convertible from a first state (71a), in which the upper part (25a) is connected to the remaining components (25b, 25c, 25d), into a second state (71b), in which the upper part (25a) is separated from the remaining components (25b, 25c, 25d).

5. Driver's cab (21) according to any of the preceding claims,
**characterised in that**,
in the second state (71b) of the passenger seat (25), the upper part (25a) can be arranged on a lying surface (18) of the driver's cab (21) and at an angle (δ) to said surface.

6. Driver's cab (21) according to claim 5,
**characterised in that**,
in the second state (71b) of the passenger seat (25), the remaining components (25b, 25c, 25d) can be arranged below the lying surface (18) of the driver's cab (21).

7. Driver's cab (21) according to any of the preceding claims,
**characterised in that**
the first component (25a) and/or at least one of the remaining components (25b, 25c, 25d) are substantially rectangular.

8. Driver's cab (21) according to any of the preceding claims,
**characterised in that**
the passenger seat (25) is connected to the rotary shaft (27a) by means of a swivel arm (28).

9. Driver's cab (21) according to claim 8,
**characterised in that**
a first end (70a) of a vertical shaft (70) is rotatably connected to the seat part (25b) and a second end (70b) of the shaft (70) is rigidly connected to a first end (28a) of the swivel arm (28).

10. Driver's cab (21) according to claim 8 or 9,
**characterised in that**
the swivel arm (28) is height-adjustable along the longitudinal axis (29) of the rotary shaft (27a).

11. Driver's cab (21) according to any of claims 8 to 10,
**characterised in that**
the seat part (25b) is detachably connected to the vertical shaft (70) and/or the swivel arm (28) is detachably connected to the rotary shaft (27a).

12. Driver's cab (21) according to any of the preceding claims,
**characterised in that**,
in a starting position (80a), the swivel arm (28) is substantially parallel to a width direction (21y) of the driver's cab (21) and/or is rotatable, with respect to the starting position (80a), about the rotary shaft (27a) by up to +90° and/or up to -90°.

13. Driver's cab (21) according to any of the preceding claims,
**characterised in that**
the seat part (25b) can be rotated with respect to the vertical shaft (70) by up to 360°.

## Revendications

1. Cabine de conduite (21), de préférence d'un véhicule utilitaire, comportant un siège de conducteur (24) et un siège de passager (25), lequel comporte au moins un premier composant (25a) configuré en tant que partie supérieure (25a) ainsi qu'un deuxième composant (25b) configuré en tant que dossier (25b) disposé adjacent à la partie supérieure (25a) et à un troisième composant (25c) configuré en tant que partie de siège (25c), les trois composants (25a, 25b, 25c) étant aptes à pivoter autour respectivement d'un axe (35a ; 35b) disposé entre respectivement deux composants adjacents (25a, 25b, 25c), le siège de passager (25) étant apte à pivoter autour d'un axe de rotation (27a) disposé verticalement sur une surface de fond (30) de la cabine de conduite (21).

2. Cabine de conduite (21) selon la revendication (1),
**caractérisée par le fait que**
le siège de passager (25) comporte une partie de pied (25d) comme quatrième composant, lequel est apte à pivoter autour d'un axe (35c) disposé entre la partie de siège (25c) et la partie de pied (25d).

3. Cabine de conduite (21) selon l'une des revendications 1 ou 2,
**caractérisée par le fait que**
les composants (25a, 25b, 25c, 25d) sont aptes à tourner autour de l'axe (35a ; 35b ; 35c), respectivement, d'un axe (35a ; 35b ; 35c) disposé entre respectivement deux composants adjacents (25a, 25b ; 25b, 25c ; 25c, 25d) de jusqu'à +180° et/ou de jusqu'à -180°.

4. Cabine de conduite (21) selon l'une des revendications 1 à 3,
**caractérisée par le fait que**
le siège de passager (25) est convertible d'un premier état (71a), dans lequel la partie supérieure (25a) est disposée reliée aux composants restants (25b, 25c, 25d), à un deuxième état (71b), dans lequel la partie supérieure (25a) est disposée séparée des composants restants (25b, 25c, 25d).

5. Cabine de conduite (21) selon l'une des revendications précédentes,
**caractérisée par le fait que**
la partie supérieure (25a) est apte à être disposée dans le deuxième état (71b) du siège de passager (25) sur une surface de couchage (18) de la cabine de conduite (21) et dans un angle (δ) par rapport à celle-ci.

6. Cabine de conduite (21) selon la revendication 5,
**caractérisée par le fait que**
les composants restants (25b, 25c, 25d) sont aptes à être disposés dans le deuxième état (71b) du siège de passager (25) au-dessous de la surface de couchage (18) de la cabine de conduite (21).

7. Cabine de conduite (21) selon l'une des revendications précédentes,
**caractérisée par le fait que**
le premier composant (25a) et/ou au moins l'un des composants restants (25b, 25c, 25d) sont réalisés de forme sensiblement rectangulaire.

8. Cabine de conduite (21) selon l'une des revendications précédentes,
**caractérisée par le fait que**
le siège de passager (25) est disposé relié à l'axe de rotation (27a) au moyen d'un bras pivotant (28).

9. Cabine de conduite (21) selon la revendication 8,
**caractérisée par le fait que**
une première extrémité (70a) d'un arbre vertical (70) est disposée reliée de façon pivotante à la partie de siège (25b) et une seconde extrémité (70b) de l'arbre (70) est disposée reliée rigidement à une première extrémité (28a) du bras pivotant (28).

10. Cabine de conduite (21) selon l'une des revendications 8 ou 9,
**caractérisée par le fait que**
le bras pivotant (28) est réglable en hauteur le long de l'axe longitudinal (29) de l'axe de rotation (27a).

11. Cabine de conduite (21) selon l'une des revendications 8 à 10,
**caractérisée par le fait que**
la partie de siège (25b) est disposée reliée de manière détachable l'arbre vertical (70) et/ou le bras pivotant (28) est disposé relié de manière détachable à l'axe de rotation (27a).

12. Cabine de conduite (21) selon l'une des revendications précédentes,
**caractérisée par le fait que**
le bras pivotant (28) dans une position initiale (80a) est disposé sensiblement parallèlement à la direction de la largeur (21y) de la cabine de conduite (21) et/ou est apte à tourner par rapport à la position initiale (80a) autour de l'axe de rotation (27a) de jusqu'à + 90° et/ou jusqu'à -90°.

13. Cabine de conduite (21) selon l'une des revendications précédentes,
**caractérisée par le fait que**
la partie de siège (25b) est apte à être disposée tournée par rapport à l'arbre vertical (70) de jusqu'à 360°.
